# EUROPEAN PATENT SPECIFICATION

(11) **EP 1 205 494 B1**
(45) Date of publication and mention of the grant of the patent: **09.04.2008**
(21) Application number: 01126478.5
(22) Date of filing: 09.11.2001
(51) Int. Cl.: C08F 10/00, C08F 4/625

(54) **Catalyst component and catalyst for addition polymerization, and process for producing addition polymers**
Katalysatorbestandteil und Katalysator zur Additionspolymerisation, und Verfahren zur Herstellung von Additionspolymeren
Composant catalytique et catalyseur pour la polymérisation par addition, et procédé de préparation des polymères d'addition

(30) Priority: 13.11.2000 JP 2000344977
(43) Date of publication of application: 15.05.2002
(73) Proprietor: Sumitomo Chemical Company, Limited, Tokyo 104-8260 (JP)
(72) Inventor: Hidai, Masanobu, Nerima-ku, Tokyo (JP); Nabika, Masaaki, Ichihara-shi, Chiba (JP)
(74) Representative: Vossius & Partner

(56) References cited:
- GB-A- 1 259 856
- GREEN, MALCOLM L. H. ET AL: ".mu.-Dinitrogenbis[[1,2-bis(dimethylphosp hino)ethane]hydrido[.eta.- 1,3,5-trimethylbenzene)]molybdenum] cation" J. CHEM. SOC., DALTON TRANS. (1974), (20), 2164-6, XP001064105
- DEMADIS, KONSTANTINOS D. ET AL: "Localization in trans,trans-[(tpy)(Cl)2OsIII(N2)OsII(Cl)2( tpy)]+ (tpy = 2,2':6',2''-Terpyridine)" INORG. CHEM. (1997), 36(25), 5678-5679, XP001064955
- FIELD, LESLIE D. ET AL: "Synthesis and Properties of Iron(II) Hydride Complexes Containing the Tripodal Tetraphosphine Ligand P(CH2CH2PMe2)3" INORG. CHEM. (1997), 36(26), 5984-5990, XP001064954
- GREEN, M. L. H. ET AL: "Arene molybdenum chemistry..pi.-Allyl, dihydride, dinitrogen, and carbonyl derivatives" J. CHEM. SOC., DALTON TRANS. (1973), (3), 301-6, XP001064125

## Description

The present invention relates to a catalyst component for addition polymerization, a catalyst for addition polymerization, and a process for producing an addition polymer. More particularly, the present invention relates to a catalyst component for addition polymerization composed of a transition metal compound having two transition metal atoms in one molecule, a catalyst for addition polymerization prepared by using the same, and a process for producing an addition polymer using this catalyst for addition polymerization.

With respect to processes for producing an addition polymer such as an olefin polymer using a transition metal compound which forms a single site catalyst such as a metallocene complex many publications have been reported. For example, JP-A-60-245604 discloses a process for producing a copolymer of ethylene with an α-olefin using a metallocene complex and half metallocene complex.

A catalyst for addition polymerization used in the production of an addition polymer is more efficient when its activity is higher, and therefore, a catalyst for addition polymerization of high activity is required.

An object of the present invention is to provide a catalyst component for addition polymerization useful for preparing a catalyst for addition polymerization having a high activity, a catalyst for addition polymerization having a high activity, and an efficient process for producing an addition polymer.

Namely, the present invention relates to a catalyst component for addition polymerization composed of a transition metal compound (A) of the following general formula [1]:

[LₚXₒM (N₂)ₙM'XₘLₗ]X'ₖ [1]

(wherein M represents a transition metal atom of group III to V in the Periodic Table of the Elements; M' represents a transition metal atom of group III to X in the Periodic Table of Elements; X each independently represents a hydrogen atom, halogen atom, alkyl group, aralkyl group, aryl group, substituted silyl group, alkoxy group, aralkyloxy group, aryloxy group, di-substituted amino group, azido group, cyano group, isothiocyanate group or group having a cyclopentadiene type anion skeleton; L represents a group which bonds to M or M' by a lone-paired electron or a π electron; X' represents a counter anion; o represents an integer of 1 to 5 and at least one X represents a group having cyclopentadiene type anion skeleton; k, l, m and p each independently represent an integer of 0 to 5; and n represents an integer of 1 to 3.).

Further, the present invention relates to a catalyst for addition polymerization obtained by a process comprising bringing the above-mentioned transition metal compound (A) into contact with an organoaluminum compound selected from the following (B1), and/or an aluminoxane selected from the following (B2) and (B3) and/or a boron compound selected from the following (C):
(B1) organoaluminum compounds of the general formula E¹ₐAlZ₃₋ₐ,
(B2) cyclic aluminoxanes having a structure of the general formula {-Al(E²)-O-}_{b},
(B3) linear aluminoxanes having a structure of the general formula E³{-Al (E³)-O-}_{c}AlE³₂
(wherein each of E¹, E² and E³ represents a hydrocarbon group; all E¹s, all E²s or all E³s may be the same or different; Z represents a hydrogen atom or halogen atom; all Zs may be the same or different; a represents a number satisfying 0<a≦3; b represents an integer of 2 or more; and c represent an integer of 1 or more.), and
(C) one or more boron compounds selected from the following (C1) to (C3):
(C1) boron compounds represented by the general formula BQ¹Q²Q³,
(C2) boron compounds represented by the general formula G⁺(BQ¹Q²Q³Q⁴)⁻, and
(C3) boron compounds represented by the general formula (L-H)⁺(BQ¹Q²Q³Q⁴)⁻
(wherein B represents boron in trivalent state; Q¹ to Q⁴ represent a halogen atom, hydrocarbon group, halogenated hydrocarbon group, substituted silyl group, alkoxy group or di-substituted amino group; they may be the same or different; G⁺ represents an inorganic or organic cation; L represents a neutral Lewis base; and (L-H)⁺ represent a Brφnsted acid),
wherein the combinations of the compound (A) with the compounds (B1) to (B3) and/or the compounds (C1) to (C3) are as defined as follows:
(1) (A), (B1), and (B2) and (B3);
(2) (A), (B1), and one or more compounds selected from (C1), (C2) and (C3);
(3) (A), (B1), (B2) and (B3), and one or more compounds selected from (C1), (C2) and (C3);
(4) (A), and (B2), and (B3);
(5) (A), and one or more compounds selected from (C1), (C2), and (C3); and
(6) (A), (B2) and (B3), and one or more compounds selected from (C1), (C2) and (C3),
and a process for producing an addition polymer using this catalyst.

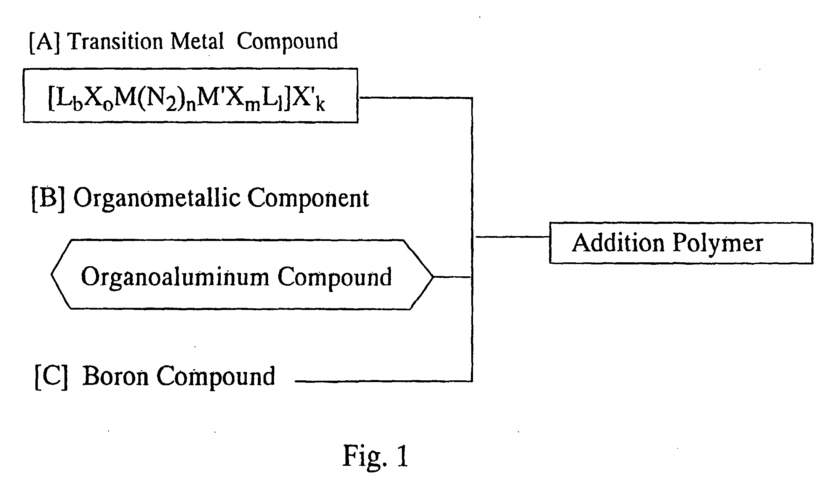

Fig. 1 is a flow chart for helping understanding of the invention. This flow chart shows a typical example of embodiments of the invention, and the scope of the present invention is not restricted to this example at all.

The present invention will be illustrated in detail below.

### (A) Transition metal compound

M and M' in a transition metal compound of the above-mentioned general formula [1] each independently represent a transition metalatom as defined below, in the Periodic Table of Elements (IUPAC Inorganic Chemistry Nomenclature revised edition, 1989).

M is a transition metal atom of group III to V, preferably a titanium atom, zirconium atom, hafnium atom, vanadium atom, niobium atom or tantalum atom, more preferably a titanium atom or zirconium atom.

M' is a transition metal atom of group III to X, preferably a transition metal atom of group VI to X**,** more preferably a chromium atom, molybdenum atom, tungsten atom, ruthenium atom, rhodium atom or palladium atom, further preferably a chromium atom, molybdenum atom or tungsten atom.

X in the above-mentioned general formula [1] represents a hydrogen atom, halogen atom, alkyl group, aralkyl group, aryl group, substituted silyl group, alkoxy group, aralkyloxy group, aryloxy group, di-substituted amino group, azido group, cyano group, isothiocyanate group or group having a cyclopentadiene type anion skeleton, and all Xs may be the same or different.

Among these, a hydrogen atom, halogen atom, alkyl group, aralkyl group, aryl group, substituted silyl group, alkoxy group, aralkyloxy group, aryloxy group, di-substituted amino group and group having a cyclopentadiene type anion skeleton are preferred.

As the halogen atom of the substituent X, a fluorine atom, chlorine atom, bromine atom and iodine atom are listed.

The alkyl group of the substituent X is preferably an alkyl group having 1 to 20 carbon atoms, and examples thereof include a methyl group, ethyl group, n-propyl group, isopropyl group, n-butyl group, sec-butyl group, tert-butyl group, n-pentyl group, neopentyl group, isoamyl group, n-hexyl group, n-octyl group, n-decyl group, n-dodecyl group, n-pentadecyl group and n-eicosyl group, and more preferable examples are a methyl group, ethyl group, isopropyl group, tert-butyl group and isoamyl group.

Any of these alkyl groups may be substituted with a halogen atom such as a fluorine atom, chlorine atom, bromine atom or iodine atom. Examples of the alkyl group having 1 to 20 carbon atoms substituted with a halogen atom include a fluoromethyl group, difluoromethyl group, trifluoromethyl group, chloromethyl group, dichloromethyl group, trichloromethyl group, bromomethyl group, dibromomethyl group, tribromomethyl group, iodomethyl group, diiodomethyl group, triiodomethyl group, fluoroethyl group, difluoroethyl group, trifluoroethyl group, tetrafluoroethyl group, pentafluoroethyl group, chloroethyl group, dichloroethyl group, trichloroethyl group, tetrachloroethyl group, pentachloroethyl group, bromoethyl group, dibromoethyl group, tribromoethyl group, tetrabromoethyl group, pentabromoethyl group, perfluoropropyl group, perfluorobutyl group, perfluoropentyl group, perfluorohexyl group, perfluorooctyl group, perfluorododecyl group, perfluoropentadecyl group, perfluoroeicosyl group, perchloropropyl group, perchlorobutyl group, perchloropentyl group, perchlorohexyl group, perchlorooctyl group, perchlorododecyl group, perchloropentadecyl group, perchloroeicosyl group, perbromopropyl group, perbromobutyl group, perbromopentyl group, perbromohexyl group, perbromooctyl group, perbromododecyl group, perbromopentadecyl group and perbromoeicosyl group.

Further, any of these alkyl groups may also be partially substituted with an alkoxy group such as a methoxy group or ethoxy group, an aryloxy group such as a phenoxy group or an aralkyloxy group such as a benzyloxy group.

The aralkyl group of the substituent X is preferably an aralkyl group having 7 to 20 carbon atoms, and examples thereof include a benzyl group, (2-methylphenyl)methyl group, (3-methylphenyl)methyl group, (4-methylphenyl)methyl group, (2,3-dimethylphenyl)methyl group, (2,4-dimethylphenyl)methyl group, (2,5-dimethylphenyl)methyl group, (2,6-dimethylphenyl)methyl group, (3,4-dimethylphenyl)methyl group, (3,5-dimethylphenyl)methyl group, (2,3,4-trimethylphenyl)methyl group, (2,3,5-trimethylphenyl)methyl group, (2,3,6-trimethylphenyl)methyl group, (3,4,5-trimethylphenyl)methyl group, (2,4,6-trimethylphenyl)methyl group, (2,3,4,5-tetramethylphenyl)methyl group, (2,3,4,6-tetramethylphenyl)methyl group, (2,3,5,6-tetramethylphenyl)methyl group, (pentamethylphenyl)methyl group, (ethylphenyl)methyl group, (n-propylphenyl)methyl group, (isopropylphenyl)methyl group, (n-butylphenyl)methyl group, (sec-butylphenyl)methyl group, (tert-butylphenyl)methyl group, (n-pentylphenyl)methyl group, (neopentylphenyl)methyl group, (n-hexylphenyl)methyl group, (n-octylphenyl)methyl group, (n-decylphenyl)methyl group, (n-tetradecylphenyl)methyl group, naphthylmethyl group and anthracenylmethyl group, and a benzyl group is preferable.

Any of these aralkyl groups may also be partially substituted with a halogen atom such as a fluorine atom, chlorine atom, bromine atom or iodine atom, an alkoxy group such as a methoxy group or ethoxy group, an aryloxy group such as a phenoxy group, or an aralkyloxy group such as a benzyloxy group.

The aryl group of the substituent X is preferably an aryl group having 6 to 20 carbon atoms, and examples thereof include a phenyl group, 2-tolyl group, 3-tolyl group, 4-tolyl group, 2,3-xylyl group, 2,4-xylyl group, 2,5-xylyl group, 2,6-xylyl group, 3,4-xylyl group, 3,5-xylyl group, 2,3,4-trimethylphenyl group, 2,3,5-trimethylphenyl group, 2,3,6-trimethylphenyl group, 2,4,6-trimethylphenyl group, 3,4,5-trimethylphenyl group, 2,3,4,5-tetramethylphenyl group, 2,3,4,6-tetramethylphenyl group, 2,3,5,6-tetramethylphenyl group, pentamethylphenyl group, ethylphenyl group, n-propylphenyl group, isopropylphenyl group, n-butylphenyl group, sec-butylphenyl group, tert-butylphenyl group, n-pentylphenyl group, neopentylphenyl group, n-hexylphenyl group, n-octylphenyl group, n-decylphenyl group, n-dodecylphenyl group, n-tetradecylphenyl group, naphthyl group and anthracenyl group, and a phenyl group is more preferable.

Any of these aryl groups may also be partially substituted with a halogen atom such as a fluorine atom, chlorine atom, bromine atom or iodine atom, an alkoxy group such as a methoxy group or ethoxy group, an aryloxy group such as a phenoxy group, or an aralkyloxy group such as a benzyloxy group.

The substituted silyl group of the substituent X is a silyl group substituted with a hydrocarbon group, and examples of the hydrocarbon group include alkyl groups having 1 to 10 carbon atoms such as a methyl group, ethyl group, n-propyl group, isopropyl group, n-butyl group, sec-butyl group, tert-butyl group, isobutyl group, n-pentyl group, n-hexyl group and cyclohexyl group, and aryl groups such as a phenyl group. As such substituted silyl group having 1 to 20 carbon atoms, for example, mono-substituted silyl groups having 1 to 20 carbon atoms such as a methylsilyl group, ethylsilyl group and phenylsilyl group, di-substituted silyl groups having 2 to 20 carbon atoms such as a dimethylsilyl group, diethylsilyl group and diphenylsilyl group,and tri-substituted silyl groups such as a trimethylsilyl group, triethylsilyl group, tri-n-propylsilyl group, triisopropylsilyl group, tri-n-butylsilyl group, tri-sec-butylsilyl group, tri-tert-butylsilyl group, triisobutylsilyl group, tert-butyldimethylsilyl group, tri-n-pentylsilyl group, tri-n-hexylsilyl group, tricyclohexylsilyl group and triphenylsilyl group are listed, and preferable are a trimethylsilyl group, tert-butyldimethylsilyl group and triphenylsilyl group.

Any of these substituted silyl groups may also be partially substituted with a halogen atom such as a fluorine atom, chlorine atom, bromine atom or iodine atom, an alkoxy group such as a methoxy group or ethoxy group, an aryloxy group such as a phenoxy group, or an aralkyloxy group such as a benzyloxy group.

The alkoxy group of the substituent X is preferably an alkoxy group having 1 to 20 carbon atoms, and examples thereof include a methoxy group, ethoxy group, n-propoxy group, isopropoxy group, n-butoxy group, sec-butoxy group, t-butoxy group, n-pentoxy group, neopentoxy group, n-hexoxy group, n-octoxy group, n-dodexoxy group, n-pentadexoxy group and n-icoxoxy group, and more preferable are a methoxy group, ethoxy group, and t-butoxy group.

Any of these alkoxy groups may also be partially substituted with a halogen atom such as a fluorine atom, chlorine atom, bromine atom or iodine atom, an alkoxy group such as a methoxy group, or ethoxy group, an aryloxy group such as a phenoxy group, or an aralkyloxy group such as a benzyloxy group.

The aralkyloxy group of the substituent X is preferably an aralkyloxy group having 7 to 20 carbon atoms, and examples thereof include a benzyloxy group, (2-methylphenyl)methoxy group, (3-methylphenyl)methoxy group, (4-methylphenyl)methoxy group, (2,3-dimethylphenyl)methoxy group, (2,4-dimethylphenyl)methoxy group, (2,5-dimethylphenyl)methoxy group, (2,6-dimethylphenyl)methoxy group, (3,4-dimethylphenyl)methoxy group, (3,5-dimethylphenyl)methoxy group, (2,3,4-trimethylphenyl)methoxy group, (2,3,5-trimethylphenyl)methoxy group, (2,3,6-trimethylphenyl)methoxy group, (2,4,5-trimethylphenyl)methoxy group, (2,4,6-trimethylphenyl)methoxy group, (3,4,5-trimethylphenyl)methoxy group, (2,3,4,5-tetramethylphenyl)methoxy group (2,3,4,6-tetramethylphenyl)methoxy group, (2,3,5,6-tetramethylphenyl)methoxy group, (pentamethylphenyl)methoxy group, (ethylphenyl)methoxy group, (n-propylphenyl)methoxy group, (isopropylphenyl)methoxy group, (n-butylphenyl)methoxy group, (sec-butylphenyl)methoxy group, (tert-butylphenyl)methoxy group, (n-hexylphenyl)methoxy group, (n-octylphenyl)methoxy group, (n-decylphenyl)methoxy group, (n-tetradecylphenyl)methoxy group, naphthylmethoxy group and anthracenylmethoxy group, and more preferable is a benzyloxy group.

Any of these aralkyloxy groups may also be partially substituted with a halogen atom such as a fluorine atom, chlorine atom, bromine atom or iodine atom, an alkoxy group such as a methoxy group or ethoxy group, an aryloxy group such as a phenoxy group, or an aralkyloxy group such as a benzyloxy group.

The aryloxy group of the substituent X is preferably an aryloxy group having 1 to 20 carbon atoms, and examples thereof include aryloxy groups having 6 to 20 carbon atoms such as a phenoxy group, 2-methylphenoxy group, 3-methylphenoxy group, 4-methylphenoxy group, 2,3-dimethylphenoxy group, 2,4-dimethylphenoxy group, 2,5-dimethylphenoxy group, 2,6-dimethylphenoxy group, 3,4-dimethylphenoxy group, 3,5-dimethylphenoxy group, 2,3,4-trimethylphenoxy group, 2,3,5-trimethylphenoxy group, 2,3,6-trimethylphenoxy group, 2,4,5-trimethylphenoxy group, 2,4,6-trimethylphenoxy group, 3,4,5-trimethylphenoxy group, 2,3,4,5-tetramethylphenoxy group, 2,3,4,6-tetramethylphenoxy group, 2,3,5,6-tetramethylphenoxy group, pentamethylphenoxy group, ethylphenoxy group, n-propylphenoxy group, isopropylphenoxy group, n-butylphenoxy group, sec-butylphenyl group, tert-butylphenoxy group, n-hexylphenoxy group, n-octylphenoxy group, n-decylphenoxy group, n-tetradecylphenoxy group, naphthoxy group and anthracenoxy group.

Any of these aryloxy groups may also be partially substituted with a halogen atom such as a fluorine atom, chlorine atom, bromine atom or iodine atom, an alkoxy group such as a methoxy group or ethoxy group, an aryloxy group such as a phenoxy group, or an aralkyloxy group such as a benzyloxy group.

The di-substituted amino group of the substituent X is an amino group substituted with two hydrocarbon groups, and examples of the hydrocarbon group include alkyl groups having 1 to 10 carbon atoms such as a methyl group, ethyl group, n-propyl group, isopropyl group, n-butyl group, sec-butyl group, tert-butyl group, isobutyl group, n-pentyl group, n-hexyl group and cyclohexyl group, and aryl groups such as a phenyl group. Examples of such di-substituted amino groups include a dimethylamino group, diethylamino group, di-n-propylamino group, diisopropylamino group, di-n-butylamino group, di-sec-butylamino group, di-tert-butylamino group, diosobutylamino group, tert-butylisopropylamino group, di-n-hexylamino group, di-n-octylamino group, di-n-decylamino group, diphenylamino group, bistrimethylsilylamino group and bis-tert-butyldimethylsilylamino group and preferable are a dimethylamino group, diethylamino group.

As the group having a cyclopentadiene-type anion skeleton of the substituent X, there are listed η⁵-(substituted)cyclopentadienyl group, η⁵-(substituted)indenyl group, η⁵-(substituted)fluorenyl group. Specific examples thereof are a η⁵-cyclopentadienyl group, η⁵-methylcyclopentadienyl group, η⁵-dimethylcyclopentadienyl group, η⁵-trimethylcyclopentadienyl group, η⁵-tetramethylcyclopentadienyl group, η⁵-pentamethylcyclopentadienyl group, η⁵-ethylcyclopentadienyl group, η⁵-n-propylcyclopentadienyl group, n⁵-isopropylcyclopentadienyl group, η⁵-n-butylcyclopentadienyl group, η⁵-sec-butylcyclopentadienyl group, η⁵-tert-butylcyclopentadienyl group, η⁵-n-pentylcyclopentadienyl group, η⁵-neopentylcyclopentadienyl group, η⁵-n-hexylcyclopentadienyl group, η⁵-n-octylcyclopentadienyl group, η⁵-phenylcyclopentadienyl group, η⁵-naphthylcyclopentadienyl group, η⁵-trimethylsilylcyclopentadienyl group, η⁵-triethylsilylcyclopentadienyl group, η⁵-tert-butyldimethylsilylcyclopentadienyl group, η⁵-indenyl group, η⁵-methylindenyl group, η⁵-dimethylindenyl group, η⁵-ethylindenyl group, η⁵-n-propylindenyl group, η⁵-isopropylindenyl group, η⁵-n-butylindenyl group, η⁵-sec-butylindenyl group, η⁵-tert-butylindenyl group, η⁵-n-pentylindenyl group, η⁵-neopentylindenyl group, η⁵-n-hexylindenyl group, η⁵-n-octylindenyl group, η⁵-n-decylindenyl group, η⁵-phenylindenyl group, η⁵-methylphenylindenyl group, η⁵-naphthylindenyl group, η⁵-trimethylsilylindenyl group, η⁵-triethylsilylindenyl group, η⁵-tert-butyldimethylsilylindenyl group, η⁵-tetrahydroindenyl group, n⁵-fluorenyl group, η⁵-methylfluorenyl group, η⁵-dimethylfluorenyl group, η⁵-ethylfluorenyl group, η⁵-diethylfluorenyl group, η⁵-n-propylfluorenyl group, η⁵-di-n-propylfluorenyl group, η⁵-isopropylfluorenyl group, η⁵-diisopropylfluorenyl group, η⁵-n-butylfluorenyl group, η⁵-sec-butylfluorenyl group, η⁵-tert-butylfluorenyl group, η⁵-di-n-butylfluorenyl group, η⁵-di-sec-butylfluorenyl group, η⁵-di-tert-butylfluorenyl group, η⁵ -n-pentylfluorenyl group, η⁵-neopentylfluorenyl group, η⁵-n-hexylfluorenyl group, η⁵-n-octylfluorenyl group, η⁵-n-decylfluorenyl group, η⁵-n-dodecylfluorenyl group, η⁵-phenylfluorenyl group, η⁵-di-phenylfluorenyl group, η⁵-methylphenylfluorenyl group, η⁵-naphthylfluorenyl group, η⁵-trimethylsilylfluorenyl group, η⁵-bis-trimethylsilylfluorenyl group, η⁵-triethylsilylfluorenyl group, η⁵-tert-butyldimethylsilylfluorenyl group, and preferable are aη⁵-cyclopentadienyl group, η⁵-methylcyclopentadienyl group, η⁵-tert-butylcyclopentadienyl group, η⁵-tetramethylcyclopentadienyl group, η⁵-pentamethylcyclopentadienyl group, η⁵-indenyl group and 5-fluorenyl group.

"η⁵-" is sometimes omitted.

X' in the above-mentioned general formula [1] represents a counter anion, and is an anionic group which is not covalent-bonded to but free ionically from M, and for example, conjugated bases of Brφnsted acids are listed. X' is preferably F⁻, Cl⁻, Br⁻, I⁻, BF₄⁻, B(phenyl)₄⁻ or PF₆⁻.

L in the above-mentioned general formula [1] represents a group which bonds to M or M' by lone pair or π electron.

The group which bonds to M or M' by a lone electron-pair is a neutral ligand which bonds to M or M' by a coordinate bond, and examples thereof include ethers such as diethyl ether, tetrahydrofuran and diethoxyethane; amines such as triethylamine and N,N,N',N'-tetramethylethylenediamine; pyridines such as pyridine, 2,6-dimethylpyridine and quinoline; phosphines such as trimethylphosphine, triethylphosphine, triphenylphosphine, dimethylphenylphosphine, methyldiphenylphosphine, 1,2-bis(dimethylphosphino)ethane, 1,2-bis(diethylphosphino)ethane, 1,2-bis(diphenylphosphino)ethane and 1,3-bis(diphenylphosphino)propane; nitriles such as acetonitrile and benzonitrile, an end-on type nitrogen molecule and carbon mono-oxide, and preferable are tetrahydrofuran, N,N,N',N'-tetramethylethylenediamine, pyridine, dimethylphenylphosphine, 1,2-bis(dimethylphosphino)ethane, 1,2-bis(diethylphosphino)ethane, 1,2-bis(diphenylphosphino)ethane, 1,3-bis(diphenylphosphino)propane, acetonitrile and carbon mono-oxide.

The group which bonds to M or M' by π electron is a neutral ligand which bonds to M or M' by a multi bonding orbital, and examples thereof include olefins such as ethylene and propylene, dienes such as butadiene, 2,4-hexadiene and 1,4-diphenylbutadiene; ketones such as acetone and benzophenone; and a side-on type nitrogen molecule, and preferable are olefins and dienes, and more preferable are ethylene, butadiene, 2,4-hexadiene and 1,4-diphenylbutadiene. o represents an integer of 1 to 5 and at least one X represents a group having a cyclopentadiene type anion skeleton; k, l, m and p each independently represent an integer of 0 to 5, and n represents an integer of 1 to 3 in the above-mentioned general formula [1]. l, m, o and p are preferably selected so as to satisfy q≧o+n; r≧m+n; n+o+p ≦6 and n+l+m≦6 when group numbers of M and M' in the Periodic Table are represented by q and r, respectively. k is preferably selected so as to satisfy k=s+t-o-m-2 when the formal oxidizing numbers of M and M' are represented by s and t, respectively.

As the partial structure M(N₂)ₙM' in a transition metal compound of the above-mentioned general formule [1], the following structures are exemplified

M-N=N-M'

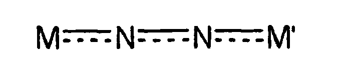

M=N-N=M'

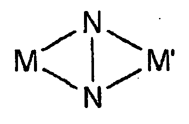

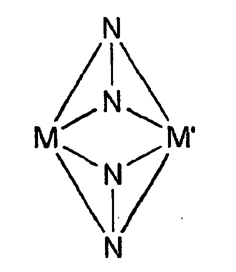

A transition metal compound of the general formula [1] used in the present invention is produced by ,for example, a method described in Organometallics, Vol. 13, p.3764-3766 (1994).

Specific examples of a compound of the general formula [1] include transition metal compounds such as [chlorotetrakis(trimethylphosphine)tungsten] (µ-dinitrogen)[trichlorotitanium], [chlorotris(trimethylphosphine)(pyridine)tungsten] (µ-dinitrogen)[trichlorotitanium], [chlorotetrakis(triethylphosphine)tungsten] (µ-dinitrogen)[trichlorotitanium], [chlorotris(triethylphosphine)(pyridine)tungsten] (µ-dinitrogen) [trichlorotitanium], [chlorotetrakis(triphenylphosphine)tungsten] (µ-dinitrogen)[trichlorotitanium], [chlorotris(triphenylphosphine)(pyridine)tungsten] (µ-dinitrogen) [trichlorotitanium], [chlorotetrakis(dimethylphenylphosphine)tungsten] (µ-dinitrogen) [trichlorotitanium], [chlorotris(dimethylphenylphosphine)(pyridine)tungsten] (µ-dinitrogen) [trichlorotitanium], [chlorotetrakis(methyldiphenylphosphine)tungsten] (µ-dinitrogen) [trichlorotitanium], [chlorotris(methyldiphenylphosphine)(pyridine)tungsten] (µ-dinitrogen) [trichlorotitanium], [chlorobis{1,2-bis(dimethylphosphino)ethane}tungsten] (µ-dinitrogen) [trichlorotitanium], [chlorobis{1,2-bis(diethylphosphino)ethane}tungsten] (µ-dinitrogen) [trichlorotitanium], [chlorobis{1,2-bis(diphenylphosphino)ethane}tungsten] (µ-dinitrogen)[trichlorotitanium], [chlorobis{1,3-bis(diphenylphosphino)propane}tungsten] (µ-dinitrogen)[trichlorotitanium], [chlorotris(trimethylphosphine)(2,6-dimethylpyridine) tungsten](u-dinitrogen)[trichlorotitanium], [chlorotris(triethylphosphine)(2,6-dimethylpyridine) tungsten](µ-dinitrogen)[trichlorotitanium], [chlorotris(triphenylphosphine)(2,6-dimethylpyridine) tungsten] (µ-dinitrogen) [trichlorotitanium], [chlorotris(dimethylphenylphosphine)(2,6-dimethylpyridine) tungsten] (µ-dinitrogen) [trichlorotitanium], [chlorotris(trimethylphosphine)(quinoline)tungsten] (µ-dinitrogen) [trichlorotitanium], [chlorotris(triethylphosphine)(quinoline)tungsten] (µ-dinitrogen) [trichlorotitanium], [chlorotris(triphenylphosphine)(quinoline)tungsten] (µ-dinitrogen) [trichlorotitanium], [chlorotris(dimethylphenylphosphine)(quinoline)tungsten] (µ-dinitrogen) [trichlorotitanium], [chloro(tetrahydrofuran)tris(trimethylphosphine)tungsten] (µ-dinitrogen) [trichlorotitanium], [chloro(tetrahydrofuran)tris(triethylphosphine)tungsten] (µ-dinitrogen) [trichlorotitanium], [chloro(tetrahydrofuran)tris(triphenylphosphine)tungsten] (µ-dinitrogen)[trichlorotitanium], [chloro(tetrahydrofuran)tris(dimethylphenylphosphine) tungsten](µ-dinitrogen)[trichlorotitanium], [chloro(diethyl ether)tris(dimethylphosphine)tungsten] (µ-dinitrogen)[trichlorotitanium], [chloro(diethyl ether)tris(triethylphosphine)tungsten] (µ-dinitrogen) [trichlorotitanium], [chloro(diethyl ether)tris(triphenylphosphine)tungsten] (µ-dinitrogen) [trichlorotitanium], [chloro(diethyl ether)tris(dimethylphenylphosphine)tungsten] (µ-dinitrogen) [trichlorotitanium], [chloro(acetonitrile)tris(trimethylphosphine)tungsten] (µ-dinitrogen) [trichlorotitanium], [chloro(acetonitrile)tris(triethylphosphine)tungsten] (µ-dinitrogen) [trichlorotitanium], [chloro(acetonitrile)tris(triphenylphosphine)tungsten] (µ-dinitrogen) [trichlorotitanium], [chloro(acetonitrile)tris(dimethylphenylphosphine)tungsten] (µ-dinitrogen) [trichlorotitanium], [chloro(benzonitrile)tris(trimethylphosphine)tungsten] (µ-dinitrogen) [trichlorotitanium], [chloro(benzonitrile)tris(triethylphosphine)tungsten] (µ-dinitrogen) [trichlorotitanium], [chloro(benzonitrile)tris(triphenylphosphine)tungsten] (µ-dinitrogen) [trichlorotitanium], [chloro(benzonitrile)tris(dimethylphenylphosphine)tungsten] (µ-dinitrogen) [trichlorotitanium], [chloro(carbonyl)tris(trimethylphosphine)tungsten] (µ-dinitrogen) [trichlorotitanium], [chloro(carbonyl)tris(triethylphosphine)tungsten] (µ-dinitrogen) [trichlorotitanium], [chloro(carbonyl)tris(triphenylphosphine)tungsten] (µ-dinitrogen) [trichlorotitanium], [chloro(carbonyl)tris(dimethylphenylphosphine)tungsten] (µ-dinitrogen) [trichlorotitanium], [chloro(dimethoxyethane)bis(trimethylphosphine)tungsten] (µ-dinitrogen)[trichlorotitanium]. [chloro(dimethoxyethane)bis(triethylphosphine)tungsten] (µ-dinitrogen)[trichlorotitanium], [chloro(dimethoxyethane)bis(triphenylphosphine)tungsten] (µ-dinitrogen)[trichlorotitanium], [chloro(dimethoxyethane)bis(dimethylphenylphosphine) tungsten](µ-dinitrogen) [trichlorotitanium], [chloro(dimethoxyethane)bis(methyldiphenylphosphine)tungsten] (µ-dinitrogen)[trichlorotitanium], [chloro(diphenylphosphinoethane)(dimethoxyethane)tungsten] (µ-dinitrogen) [trichlorotitanium], [chloro(diphenylphosphinopropane)(dimethoxyethane)tungsten] (µ-dinitrogen) [trichlorotitanium], [chloro(N,N,N',N'-tetramethylethylenediamine)bis(trimethyl phosphine)tungsten] (µ-dinitrogen) [trichlorotitanium], [chloro(N,N,N',N'-tetramethylethylenediamine)bis (triethylphosphine)tungsten] (µ-dinitrogen) [trichlorotitanium], [chloro(N,N,N',N'-tetramethylethylenediamine)bis(triphenyl phosphine)tungsten] (µ-dinitrogen) [trichlorotitanium], [chloro(N,N,N',N'-tetramethylethylenediamine)bis(dimethylp henylphosphine)tungsten] (µ-dinitrogen) [trichlorotitanium]. [chloro(N,N,N',N'-tetramethylethylenediamine)bis(methyldip henylphosphine)tungsten] (µ-dinitrogen) [trichlorotitanium], [chloro(N,N,N',N'-tetramethylethylenediamine)(diphenylphos phinoethane)tungsten] (µ-dinitrogen) [trichlorotitanium]and [chloro(N,N,N',N'-tetramethylethylenediamine)(diphenylphos phinopropane)tungsten] (µ-dinitrogen) [trichlorotitanium], compounds obtained by substituting tungsten in these compounds by molybdenum, chromium, ruthenium, rhodium or palladium, compounds obtained by substituting titanium in these compounds by zirconium, hafnium, vanadium, niobium, tantalum or scandium, and compounds obtained by substituting chloro in these compounds by fluoro, bromo, iodo, methyl, benzyl, methoxy or phenoxy.

The transition metal compound of the general formula [1] is preferably a transition metal compound in which o represents an integer of 1 to 5 and at least one X is a group having a cyclopentadiene-type anion skeleton. Specific examples of such a preferable transition metal compound include transition metal compounds such as [chlorotetrakis(trimethylphosphine)tungsten] (µ-dinitrogen) [dichloro(cyclopentadienyl)titanium], [chlorotris(trimethylphosphine)tungsten] (µ-dinitrogen) [dichloro(cyclopentadienyl)titanium], [chlorotetrakis(triethylphosphine)(pyridine)tungsten] (µ-dinitrogen) [dichloro(cyclopentadienyl)titanium], [chlorotris(triethylphosphine)(pyridine)tungsten] (µ-dinitrogen) [dichloro(cyclopentadienyl)titanium], [chlorotetrakis(triphenylphosphine)tungsten] (µ-dinitrogen) [dichloro(cyclopentadienyl)titanium], [chlorotris(triphenylphosphine)(pyridine)tungsten] (µ-dinitrogen) [dichloro(cyclopentadienyl)titanium], [chlorotetrakis(dimethylphenylphosphine)tungsten] (µ-dinitrogen) [dichloro(cyclopentadienyl)titanium], [chlorotris(dimethylphenylphosphine)(pyridine)tungsten] (µ-dinitrogen) [dichloro(cyclopentadienyl)titanium], [chlorotetrakis(methyldiphenylphosphine)tungsten] (µ-dinitrogen) [dichloro(cyclopentadienyl)titanium], [chlorotris(methyldiphenylphosphine)(pyridine)tungsten] (µ-dinitrogen) [dichloro(cyclopentadienyl)titanium], [chlorobis{1,2-bis(dimethylphosphino)ethane}tungsten] (µ-dinitrogen) [dichloro(cyclopentadienyl)titanium], [chlorobis{1,2-bis(diethylphosphino)ethane}tungsten] (µ-dinitrogen) [dichloro(cyclopentadienyl)titanium], [chlorobis{1,2-bis(diphenylphosphino)ethane}tungsten] (µ-dinitrogen) [dichloro(cyclopentadienyl)titanium], [chlorobis{1,3-bis(diphenylphosphino]propane}tungsten] (µ-dinitrogen) [dichloro(cyclopentadienyl)titanium], [chlorotris(trimethylphosphine)(2,6-dimethylpyridine)tungs ten(µ-dinitrogen) [dichloro(cyclopentadienyl)titanium], [chlorotris(trimethylphosphine) (2,6-dimethylpyridine)tungst en(µ-dinitrogen) [dichloro(cyclopentadienyl)titanium], [chlorotris(triethylphosphine)(2,6-dimethylpyridine)tungst en(µ-dinitrogen) [dichloro(cyclopentadienyl)titanium], [chlorotris(dimethylphenylphosphine)(2,6-dimethylpyridine) tungsten(µ-dinitrogen) [dichloro(cyclopentadienyl)titanium], [chlorotris (trimethylphosphine)(quinoline)tungsten(µ-dinitrogen) [dichloro(cyclopentadienyl)titanium], [chlorotris(triethylphosphine)(quinoline)tungsten (µ-dinitrogen) [dichloro(cyclopentadienyl)titanium], [chlorotris(triphenylphosphine)(quinoline)tungsten (µ-dinitrogen) [dichloro(cyclopentadienyl)titanium], [chlorotris(dimethylphenylphosphine)(quinoline)tungsten (µ-dinitrogen) [dichloro(cyclopentadienyl)titanium], [chloro(tetrahydrofuran)tris(trimethylphosphine)tungsten (µ-dinitrogen) [dichloro(cyclopentadienyl)titanium], [chloro(tetrahydrofuran)tris(triethylphosphine)tungsten (µ-dinitrogen) [dichloro(cyclopentadienyl)titanium], [chloro(tetrahydrofuran)tris(triphenylphosphine)tungsten (µ-dinitrogen) [dichloro(cyclopentadienyl)titanium], [chloro(tetrahydrofuran)tris(dimethylphenylphosphine) tungsten(µ-dinitrogen) [dichloro(cyclopentadienyl)titanium], [chloro(diethyl ether)tris(trimethylphosphine)tungsten (µ-dinitrogen) [dichloro(cyclopentadienyl)titanium], [chloro(diethyl ether)tris(triethylphasphine)tungsten (µ-dinitrogen) [dichloro(cyclopentadienyl)titanium], [chloro(diethyl ether)tris(triphenylphosphine)tungsten (µ-dinitrogen) [dichloro(cyclopentadienyl)titanium], [chloro(diethyl ether)tris(dimethylphenylphosphine)tungsten(µ-dinitrogen) [dichloro(cyclopentadienyl)titanium], [chloro(acetonitrile)tris(trimethylphosphine)tungsten (µ-dinitrogen) [dichloro(cyclopentadienyl)titanium], [chloro(acetonitrile)tris(triethylphosphine)tungsten (µ-dinitrogen) [dichloro(cyclopentadienyl)titanium], [chloro(acetonitrile)tris(triphenylphosphine)tungsten (µ-dinitrogen) [dichloro(cyclopentadienyl)titanium], [chloro(acetonitrile)tris(dimethylphenylphosphine)tungsten (µ-dinitrogen) [dichloro(cyclopentadienyl)titanium], [chloro(benzonitrile)tris(trimethylphosphine)tungsten (µ-dinitrogen) [dichloro(cyclopentadienyl)titanium], [chloro(benzonitrile)tris(triethylphosphine)tungsten (µ-dinitrogen) [dichloro(cyclopentadienyl)titanium], [chloro(benzonitrile)tris(triphenylphosphine)tungsten (µ-dinitrogen) [dichloro(cyclopentadienyl)titanium], [chloro(benzonitrile)tris(dimethylphenylphosphine)tungsten (µ-dinitrogen) [dichloro(cyclopentadienyl)titanium], [chloro(carbonyl)tris(trimethylphosphine)tungsten (µ-dinitrogen) [dichloro(cyclopentadienyl)titanium], [chloro(carbonyl)tris(triethylphosphine)tungsten (µ-dinitrogen) [dichloro(cyclopentadienyl)titanium], [chloro(carbonyl)tris(triphenylphosphine)tungsten (µ-dinitrogen) [dichloro(cyclopentadienyl)titanium], [chloro(carbonyl)tris(dimethylphenylphosphine)tungsten (µ-dinitrogen) [dichloro(cyclopentadienyl)titanium], [chloro(dimethoxyethane)bis(trimethylphosphine)tungsten (µ-dinitrogen) [dichloro(cyclopentadienyl)titanium], [chloro(dimethoxyethane)bis(triethylphosphine)tungsten (µ-dinitrogen) [dichloro(cyclopentadienyl)titanium], [chloro(dimethoxyethane)bis(triphenylphosphine)tungsten (µ-dinitrogen) [dichloro(cyclopentadienyl)titanium], [chloro(dimethoxyethane)bis(dimethylphenylphosphine) tungsten(µ-dinitrogen) [dichloro(cyclopentadienyl)titanium], [chloro(dimethoxyethane)bis(methyldiphenylphosphine) tungsten(µ-dinitrogen)[dichloro(cyclopentadienyl)titanium], [chloro(diphenylphosphinoethane)(dimethoxyethane)tungsten (µ-dinitrogen) [dichloro(cyclopentadienyl)titanium], [chloro(diphenylphosphinopropane)(dimethoxyethane)tungsten (µ-dinitrogen) [dichloro(cyclopentadienyl)titanium], [chloro(N,N,N',N'-tetramethylethylenediamine)bis(trimethyl phosphine)tungsten] (µ-dinitrogen) [dichloro(cyclopentadienyl)titanium], [chloro(N,N,N',N'-tetramethylethylenediamine)bis(triethylp hosphine)tungsten] (µ-dinitrogen) [dichloro(cyclopentadienyl)titanium], [chloro(N,N,N',N'-tetramethylethylenediamine)bis(triphenyl phosphine)tungsten] (µ-dinitrogen) [dichloro(cyclopentadienyl)titanium], [chloro(N,N,N',N'-tetramethylethylenediamine)bis(dimethylp henylphosphine)tungsten] (µ-dinitrogen) [dichloro(cyclopentadienyl)titanium], [chloro(N,N,N',N'-tetramethylethylenediamine)bis(methyldip henylphosphine)tungsten] (µ-dinitrogen) [dichloro(cyclopentadienyl)titanium], [chloro(N,N,N',N'-tetramethylethylenediamine)(diphenylphos phinoethane)tungsten](µ-dinitrogen) [dichloro(cyclopentadienyl)titanium] and [chloro(N,N,N',N'-tetramethylethylenediamine)(diphenylphos phinopropane)tungsten](µ-dinitrogen) [dichloro(cyclopentadienyl)titanium], compounds obtained by substituting tungsten in these compounds by molybdenum, chromium, ruthenium, rhodium or palladium, compounds obtained by substituting titanium in these compounds by zirconium, hafnium, vanadium, niobium, tantalum or scandium, compounds obtained by substituting dichloro in these compounds by difluoro, dibromo, diiodo, dimethyl, dibenzyl, dimethoxy, diphenoxy, 1,3-butadiene, 2,4-hexadiene, diphenyl-1,3-butadiene, (chloro)(methyl), (benzyl)(chloro), (chloro)(methoxy) or (chloro)(phenoxy) and transition metal compounds obtained by substituting cyclopentadienyl in these compounds by methylcyclopentadienyl, dimethylcyclopentadienyl, trimethylcyclopentadienyl, tetramethylcyclopentadienyl, n-butylcyclopentadienyl, tert-butyldimethylsilylcyclopentadienyl, indenyl, tetrahydroindenyl, fluorenyl or octahydrofluorenyl.

The catalyst component for addition polymerization of the present invention is a catalyst component for addition polymerization composed of a transition metal compound of the general formula [1], and catalysts for addition polymerization having a high activity are obtained by contacting this component with a co-catalyst component for activation.

The co-catalyst component for activation is preferably the following (B) and/or (C), and the catalyst for addition polymerization of the present invention is preferably a catalyst for addition polymerization obtained by bringing a transition metal compound (A) of the general formula [1] into contact with an organoaluminum compound selected from the following (B1), and/or an aluminoxane selected from the following (B2) and (B3) and/or a boron compound selected from the following (C):
(B1) organic aluminum compounds of the general formula E¹ₐAlZ₃₋ₐ,
(B2) cyclic aluminoxanes having a structure of the general formula {-Al-(E²)-O-}_{b},
(B3) linear aluminoxanes having a structure of the general formula E³{-Al(E³)-O-}_{c}AlE³₂
-(wherein each of E¹, E² and E³ represents a hydrocarbon group, and all E¹s, all E²s or all E³s may be the same or different. Z represents a hydrogen atom or halogen atom, and all Zs may be the same or different. a represents a number satisfying 0<a≦3, b represents an integer of 2 or more, and c represent an integer of 1 or more), and
(C) one or more boron compounds selected from the following (C1) to (C3):
(C1) boron compounds represented by the general formula BQ¹Q²Q³,
(C2) boron compounds represented by the general formula G⁺(BQ¹Q²Q³Q⁴)⁻,
(C3) boron compounds represented by the general formula (L-H)⁺(BQ¹Q²Q³Q⁴)⁻
(wherein B represents a trivalent boron atom in valance state, and Q¹ to Q⁴ represent a halogen atom, hydrocarbon group, halogenated hydrocarbon group, substituted silyl group, alkoxy group or di-substituted amino group, and they may be the same or different. G⁺ represents an inorganic or organic cation, and L represents a neutral Lewis base and (L-H)⁺ represents a Brφnsted acid), wherein the combinations of the compound (A) with the compounds (B1) to (B3) and/or the compounds (C1) to (C3) are as defined as follows:
(1) (A), (B1), and (B2) and (B3);
(2) (A), (B1), and one or more compounds selected from (C1), (C2) and (C3);
(3) (A), (B1), (B2) and (B3), and one or more compounds selected from (C1), (C2) and (C3);
(4) (A), and (B2) and (B3);
(5) (A), and one or more compounds selected from (C1), (C2) and (C3); and
(6) (A), (B2) and (B3), and one or more compounds selected from (C1), (C2) and (C3),

The catalyst for addition polymerization will be further illustrated in detail below.

### (B) Aluminum compound

The aluminum compound (B) includes organoaluminum compounds of the following (B1) and aluminoxanes of the following(B2) and (B3).
(B1) organic aluminum compounds represented by the general formula E¹ₐAlZ₃₋ₐ,
(B2) cyclic aluminoxanes having a structure represented by the general formula {-Al(E²)-O-}_{b},
(B3) linear aluminoxanes having a structure represented by the general formula E³{-Al(E³)-O-}_{c}AlE³₂
(wherein, each of E¹, E² and E³ represents a hydrocarbon group; all E¹s, all E²s or all E³s may be the same or different; Z represents a hydrogen atom or halogen atom; all Zs may be the same or different; a represents a number satisfying 0<a≦3; b represents an integer of 2 or more; and c represent an integer of 1 or more.).

As the hydrocarbon group represented by E¹, E² and E³, a hydrocarbon group having 1 to 8 carbon atoms is preferable, and an alkyl group is more preferable.

Specific examples of the organic aluminum compound (B1) represented by the general formula E¹ₐAlZ₃₋ₐ include trialkylaluminums such as trimethylaluminum, triethylaluminum, tripropylaluminum, triisobutylaluminum and trihexylaluminium; dialkylaluminum chlorides such as dimethylaluminum chloride, diethylaluminum chloride, dipropylaluminum chloride, diisobutylaluminum chloride and dihexylaluminium chloride; alkylaluminum dichlorides such as methylaluminum dichloride, ethylaluminum dichloride, propylaluminum dichloride, isobutylaluminum dichloride and hexylaluminium dichloride;and dialkylaluminum hydrides such as dimethylaluminum hydride, diethylaluminum hydride, dipropylaluminum hydride, diisobutylaluminum hydride and dihexylaluminum hydride.

Trialkylaluminums are preferable, and triethylaluminum or triisobutylaluminum is more preferable.

As specific examples of E² and E³ in cyclic aluminoxanes (B2) having a structure of the general formula {-Al(E²)-O-}_{b}, and linear aluminoxanes (B3) having a structure of the general formulaE³{-Al(E³)-O-}_{c}AlE³₂. alkyl groups such as a methyl group, ethyl group, n-propyl group, isopropyl group, n-butyl group, isobutyl group, n-pentyl group and neopentyl group can be exemplified. b in an integer of 2 or more, and c is an integer of 1 or more. Preferably, E² and E³ are a methyl group or isobutyl group, n is 2 to 40, and c is 1 to 40.

The above-mentioned aluminoxane is produced by various methods. The method is not particularly restricted, and it may be advantageously carried out according to a known method. For example, a trialkylaluminum (for example, trimethylaluminum) is dissolved in a suitable organic solvent (benzene or aliphatic hydrocarbon) to prepare a solution which is allowed to contact with water. Alternatively, there is exemplified a method in which a trialkylaluminum(for example trimethylaluminum) is allowed to contact with a metal salt containing crystal water (for example copper sulfate hydrate).

The aluminoxane produced by such methods is usually supposed to be a mixtures of a cyclic aluminoxane and a linear aluminoxane.

### (C) Boron compound

As the boron compound (C), one or more boron compounds selected from (C1) boron compounds represented by the general formula BQ¹Q²Q³, (C2) boron compounds represented by the general formula G⁺(BQ¹Q²Q³Q⁴)⁻, and (C3) boron compounds represented by the general formula (L-H)⁺(BQ¹Q²Q³Q⁴)⁻ are used, in the present invention.

In the boron compound (C1) of the general formula BQ¹Q²Q³, B represents a trivalent boron atom, and Q¹ to Q³ represent a halogen atom, hydrocarbon group, halogenated hydrocarbon group, substituted silyl group, alkoxy group or di-substituted amino group, and they may be the same or different. Q¹ to Q³ preferably represent a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms, or an amino group having 1 to 20 carbon atoms, and Q¹ to Q³ more preferably represent a halogen atom, a hydrocarbon group having 1 to 20 carbon atoms or a halogenated hydrocarbon group having 1 to 20 carbon atoms. Further preferably, Q¹ to Q⁴ represent a fluorinated hydrocarbon group having 1 to 20 carbon atoms containing at least one fluorine atom, and particularly preferably, Q¹ to Q⁴ represent a fluorinated aryl group having 6 to 20 carbon atoms containing at least fluorine atom.

Specific examples of the compound (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane and phenylbis(pentafluorophenyl)borane and tris(pentafluorophenyl)borane is most preferable.

In the boron compound (C2) of the general formula G⁺(BQ¹Q²Q³Q⁴)⁻, G⁺ represents an inorganic or organic cation, B represents a trivalent boron atom, and Q¹ to Q⁴ are as defined for Q¹ to Q³ in the above-mentioned (C1).

As specific examples of an inorganic cation G⁺ in the compound of the general formula G⁺(BQ¹Q²Q³Q⁴)⁻, a ferrocenium cation, alkyl-substituted ferrocenium cation and silver cation are listed, and as specific example of an organic cation G⁺ in the compound, a triphenylmethyl cation is listed. G⁺ represents preferably a carbenium cation, and particularly preferably a triphenylmethyl cation. As (BQ¹Q²Q³Q⁴)⁻, there are listed tetrakis(pentafluorophenyl)borate, tetrakis(2,3,5,6-tetrafluoropheny)borate, tetrakis(2,3,4,5-tetrafluorophenyl)borate, tetrakis(3,4,5-trifluorophenyl)borate, tetrakis(2,3,4-trifluorophenyl)borate, phenyltris(pentafluorophenyl)borate and tetrakis(3,5-bistrifluoromethylphenyl)borate

As specific combinations thereof, ferrocenium tetrakis(pentafluorophenyl)borate, 1,1'-dimethylferrocenium tetrakis(pentafluorophenyl)borate, silver tetrakis(pentafluorophenyl)borate, tripheylmethyltetrakis(pentafluorophenyl)borate and triphenylmethyltetrakis(3,5-bistrifluoromethylphenyl) borate are listed, and triphenylmethyltetrakis(pentafluorophenyl)borate is most preferable.

In the boron compound (C3) of the general formula (L-H)⁺(BQ¹Q²Q³Q⁴)⁻. L represents a neutral Lewis base and (L-H)⁺ represents a Brφnsted acid, B represents a trivalent boron atom, and Q¹ to Q⁴ are as defined for Q¹ to Q³ in the above-mentioned Lewis acid (C1).

As specific examples of the Brφnsted acid (L-H)⁺ in the compound of the general formula (L-H)⁺(BQ¹Q²Q³Q⁴)⁻, trialkyl-substituted ammoniums, N,N-dialkylaniliniums and dialkylammoniums, triarylphosphoniums are listed, and as (BQ¹Q²Q³Q⁴)⁻, the same moieties as described above are listed.

As specific combinations thereof, triethylammoniumtetrakis(pentafluorophenyl)borate, tripropylammonium tetrakis(pentafluorophenyl)borate, tri(n-butyl)ammoniumtetrakis(pentafluorophenyl)borate, tri(n-butyl)ammonium tetrakis(3,5-bistrifluoromethylphenyl)borate, N,N-dimethylaniliniumtetrakis(pentafluorophenyl)borate, N,N-diethylanilinium tetrakis(pentafluorophenyl)borate, N,N-2,4,6-pentamethylaniliniumtetrakis (pentafluorophenyl)borate, N,N-dimethylaniliniumtetrakis (3,5-bistrifluoromethylphenyl)borate, diisopropylammoniumtetrakis(pentafluorophenyl)borate, dicyclohexyammoniumtetrakis(pentafluorophenyl)borate, triphenylphosphoniumtetrakis(pentafluorophenyl)borate, tri(methylphenyl)phosphoniumtetrakis(pentafluorophenyl) borate and tri(dimethylphenyl)phosphoniumtetrakis (pentafluorophenyl)borate are listed, and most preferable is tri(n-butyl)ammonium tetrakis(pentafluorophenyl)borate, or N,N-dimethylaniliniumtetrakis(pentafluorophenyl)borate.

### [Production of addition polymer]

The process for producing an addition polymer of the present invention is a process for producing an addition polymer comprising polymerizing an addition polymerizable monomer with the above-mentioned catalyst for addition polymerization.

Contact in producing a catalyst for addition polymerization by bringing the above-mentioned transition metal compound into contact with a co-catalyst component for activation (components (B1)-(B3), and (C)) may be conducted by any means providing the transition metal compound and the co-catalyst for activation are in contact to form a catalyst, and there are adopted a method in which a transition metal compound and a co-catalyst for activation are previously diluted by a solvent or not diluted, before they are mixed for mutual contact, and a method in which a transition metal compound and a co-catalyst for activation are separately fed into a polymerization reactor for mutual contact thereof. As the co-catalyst for activation, a plurality of compounds may be combined and used, however, it is needless to say that a part of which may be previously mixed and used, or they may be separately fed into a polymerization reactor and used.

It is desirable to use components so that the molar ratio of (B)/transition metal compound (A) is from 0.1 to 10000, preferably from 5 to 2000, and the molar ratio of (C) /transition metal compound (A) is from 0.01 to 100, preferably from 0.5 to 10.

The concentrations of components when they are used in the form of a solution, or suspension or slurry in a solvent are appropriately selected depending on the ability of an apparatus for feeding components into a polymerization reactor, and it is generally desirable that the concentration of the transition metal compound (A) is usually from 0.001 to 200 mmol/L, more preferably from 0.01 to 100 mmol/L, further preferably from 0.05 to 50 mmol/L, the concentration of (B) is, in terms of an Al atom, usually from 0.01 to 5000 mmol/L, more preferably from 0.1 to 2500 mmol/L, further preferably 0.1 to 2000 mmol/L, and the concentration of (C) is usually from 0.001 to 500 mmol/L, more preferably from 0.01 to 250 mmol/L, further preferably from 0.05 to 100 mmol/L.

The process for producing an addition polymer of the present invention can be applied to various polymerization methods of addition polymerizable monomers, and of them, is suitable as a process for producing a polymer of an olefin and/or alkenyl aromatic hydrocarbon.

As the olefins herein referred to, olefins having 2 to 20 carbon atoms, particularly, ethylene, α-olefins having 3 to 20 carbon atoms, diolefins having 4 to 20 carbon atoms, can be used, and two or more olefins can be used simultaneously. Specific examples of the olefin include, for example, linear olefins such as ethylene, propylene, 1-butene, 1-pentene, 1-hexene, 1-heptene, 1-octene, 1-nonene and 1-decene, and branched olefins such as 3-methyl-1-butene, 3-methyl-1-pentene, 4-methyl-1-pentene and 5-methyl-1-hexene, and vinylcyclohexane. Specific examples of combinations of monomers in conducting copolymerization, include, for example, ethylene and propylene, ethylene and 1-butene, ethylene and 1-hexene, ethylene and 1-octane and propylene and 1-butene.

As the above-mentioned alkenyl aromatic hydrocarbon, alkenyl aromatic hydrocarbons having an aromatic hydrocarbon group of 6 to 25 carbon atoms are preferable, and specific examples thereof include, for example, a phenyl group, tolyl group, xylyl group, tert-butylphenyl group, vinylphenyl group, naphthyl group, phenanethryl group and anthracenyl group.

The aromatic hydrocarbon group is preferably a phenyl group, tolyl group, xylyl group, tert-butylphenyl group, vinylphenyl group or naphthyl group. Examples of the alkenyl aromatic hydrocarbon include alkylstyrenes such as p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethylstyrene, 3,5-dimethylstyrene, 3-methyl-5-ethylstyrene, p-tert-butylstyrene and p-sec-butylstyrene; alkenylbenzenes such as styrene, 2-phenylpropylene and 2-phenylbutene; and vinylnaphthalenes such as 1-vinylnaphthalene. Among them, styrene, p-methylstyrene, m-methylstyrene, o-methylstyrene, p-tert-butylstyrene, 2-phenypropylene and 1-vinylnaphthalene are preferred, and styrene is particularly preferred.

The process for producing an addition polymer of the present invention is suitable for producing a copolymer of the above-mentioned olefin with the above-mentioned alkenyl aromatic hydrocarbon, and as the combination of monomers in this process, combinations of ethylene and styrene, propylene and styrene, ethylene, propylene and styrene are listed, and particularly, this process is suitable for producing a copolymer of ethylene with styrene.

The process for producing an addition polymer of the present invention is particularly suitable for producing copolymers of ethylene and α-olefins having 3 to 8 carbon atoms, particularly, linear low density polyethylenes.

The polymerization method should also not be limited particularly, and for example, solvent polymerization using, as a solvent, an aliphatic hydrocarbon such as butane, pentane, hexane, heptane and octane, an aromatic hydrocarbon such as benzene or toluene or a halogenated hydrocarbon such as methylene dichloride,or slurry polymerization, gas phase polymerization in gaseous monomer(s) can be applied, and any of continuous polymerization and batch-wise polymerization is possible.

The polymerization temperature can be usually from -50°C to 200°C , and is particularly, preferably from -20°C to 100°C, and the polymerization pressure is usually preferably from normal pressure to 60 kg/cm². The polymerization time is generally determined appropriately depending on the kind of the intended polymer, and the reaction apparatus, and usually, it can be from 1 minute to 20 hours. Further, in the present invention, a chain transfer agent such as hydrogen can also be added for controlling the molecular weight of a copolymer.

### EXAMPLES

The present invention is illustrated using the following Examples and Comparative Examples in more detail below, but not limited therto.

The properties of polymers in Examples were measured by the following methods.
(1) Intrinsic viscosity [η] was measured by using a Ubbellohde viscometer in a tetralin solution at 135°C.
(2) Weight-average molecular weight (Mw), number-average molecular weight (Mn) and molecular weight distribution (Mw/Mn): The molecular weights were measured by gel permeation chromatography (GPC) under the following conditions. A calibration curve was made by using standard polystyrene. The molecular weight distribution was evaluated as a ratio (Mw/Mn) of the weight-average molecular weight (Mw) to the number-average molecular weight (Mn).

| | |
|---|---|
| Machine 150CV type, | manufactured by Millipore Waters |
| Column | Shodex M/S 80 |
| Measurement temperature | 145°C, solvent: orthodichlorobenzene |
| Sample concentration | 5 mg/8 ml |

(3) Content of repeating units derived from α-olefin in ethylene-α-olefin copolymer (α-olefin content):
It was measured from the specific absorptions of ethylene and α-olefin using an infrared spectrophotometer (IR-810, manufactured by Nippon Bunko Kogyo K.K.), and represented in terms of short chain branch (SCB) numbers per 1000 carbons.

(4) Melting point of copolymer:

### (In the case of Example 9)

It was measured by using Seiko SSC-5200 under the following conditions.
Cooling: 20°C to -50°C (20°C/min.), kept for 5 minutes
Heating: -50°C to 200°C (20°C/min.), kept for 5 minutes
Cooling: 200°C to -50°C (20°C/min.), kept for 5 minutes
Measurement : -50°C to 300°C (20°C/min.)

### (In other case than Example 9)

It was measured by using Seiko SSC-5200 under the following conditions.
Heating: 40°C to 150°C (10°C/min.), kept for 5 minutes
Cooling: 150°C to 10°C (5°C/min.), kept for 10 minutes
Measurement: 10°C to 160°C (5°C/min.)

### Example 1(1)

### Synthesis of [chlorotetrakis(dimethylphenylphosphine) tungsten] (µ-dinitrogen) [dichloro(cyclopentadienyl) titanium]

225.2 mg (0.284 mmol) of cis-bis(dinitrogen)tetrakis (dimethylphenylphosphine)tungsten and 62.2 mg (0.284 mmol) of trichloro(cyclopentadienyl)titanium were dissolved in 5 ml of benzene, to recognize generation of a gas from the solution, and the color of the solution changed from orange to dark green. This solution was stirred for 8 hours, then, the solvent was distilled off to obtain dark green solid. The dark green solid was subjected to extraction with methylene chloride, and the resulted extracted substance was re-crystallized by using a methylene chloride/ether mixed solvent, to obtain 196.0 mg of a black crystal. Yield: 70%. 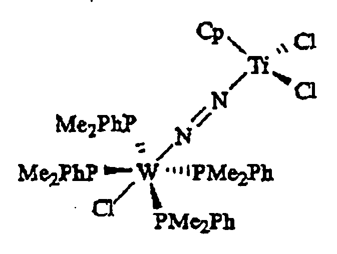 ¹H-NMR(CDCl₃) δ : 1.63 (s, 24H. PMe), 6.44 (s, 5H, Cp), 7.27-7.46 (m, 20H, Ph);
³¹P{¹H}-NMR(CDCl₃) δ : -24.5 (s with ¹⁸³W satellites, J_{wp} = 277 Hz);
IR(KBr) 1408(m)cm⁻¹.
Anal. Calcd. for C₃₇H₄₉Cl₃N₂P₄TiW: C, 45.17; H, 5.02; N, 2.85. Found: C, 45.50; H, 5.29; N,2.70

### Example 1(2)

### Synthesis of {chlorobis[1,2-bis(diphenylphosphino) ethane] tungsten}(µ-dinitrogen)[dichloro(cyclopentadienyl) titanium](diethyl ether)(dichloromethane);

198.0 mg (0.191 mmol) of trans-bls(N₂)bis [1,2-bis(diphenylphosphino)ethane]tungsten and 41.9 mg (0.191 mmol) of trichloro(cyclopentadienyl)titanium were dissolved in 5 ml of tetrahydrofuran under room temperature, to recognize generation of a gas from the solution, and the color of this solution changed from orange to dark green. This solution was stirred for 8 hours, then, the solvent was distilled off to obtain dark green solid. The dark green solid was subjected to extraction with methylene chloride, and the resulted extracted substance was re-crystallized by using a methylene chloride/ether mixed solvent, to obtain 166.2 mg of a black crystal. Yield: 63%. 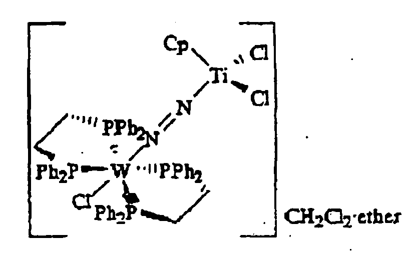 ¹H NMR (CDCl₃) δ : 1.21 (s, 6H, J=6.8Hz, Me of ether),2.46, 2.89 (br, 4H, each, CH₂ of dppe), 3.48 (q, 4H, J=7.3Hz, CH₂ of ether), 5.29 (s, 2H, CH₂Cl₂). 5.70(s. 5H. Cp), 6.66-7.67(m, 40H, Ph);
³¹P{¹H} NMR (CDCl₃) δ : 36.0 (s with¹⁸³W satellites , J_{WP} = 284 Hz);
IR (KBr) 1412(m) cm⁻¹.
Anal. Calcd for C₆₃H₆₅Cl₅N₂OP₄TiW: C, 53.69; H, 4.72; N, 2.02. Found: C, 53.49; H, 4.60; N,2.19

### Example 1(3)

### Synthesis of {chlorobis[1,2-bis(diphenylphosphino)ethane] molybdenum) (µ-dinitrogen)[dichloro(cyclopentadienyl)titunium];

194.7 mg (0.205 mmol) of trans-bis (dinitrogen)bis [1,2-bis (diphenylphosphino)ethane]molybdenum and 45.0 mg (0.205 mmol) of trichloro(cyclopentadienyl)titanium were dissolved in 5 ml of tetrahydrofuran under room temperature, to recognize generation of a gas from the solution, and the color of this gas changed fromorange to dark green. This solution was stirred for 8 hours, then, the solvent was distilled off to obtain dark green solid. The dark green solid was subjected to extraction with methylene chloride, and the resulted extracted substance was re-crystallized by using a methylene chloride/ether mixed solvent, to obtain 182.3 mg of a black crystal. Yield: 78%. 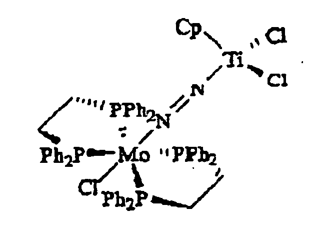 ¹H-NMR(CDCl₃) δ : 2.31, 2.66 (br, 4H each, CH₂ of dppe), 5.73 (s, 5H. Cp). 6.78-7.77 (m, 40H, Ph): ³¹P{¹H}NMR(CDCl³) δ : 52.9 (s);
IR(KBr) 1416 (m)cm⁻¹.
Anal. Calcd for C₅₇H₅₃Cl₃MoN₂P₄Ti: C, 60.05; H, 4.69; N, 2.46. Found: C, 60.13; H, 5.06; N, 2.22

### Example 1(4)

### Synthesis of {chlorobis[1,2-bis(diphenylphosphino) ethane]tungsten}(µ-dinitrogen)[trichloro (cyclopentadienyl)niobium](diethylether);

164.6 mg (0.159 mmol) of trans-bis(dinitrogen)bis [1,2-bis(diphenylphosphino)ethane]tungsten and47.6mg(0.159 mmol) of tetrachloro(cyclopentadienyl)niobium were dissolved in 5 ml of tetrahydrofuran under room temperature, to recognize generation of a gas from the solution, and the color of this gas changed from orange to black. This solution was stirred for 1 hour, then, the solvent was distilled off to obtain dark green solid. The dark green solid was subjected to extraction with methylene chloride, and the resulted extracted substance was re-crystallized by using a methylene chloride/ether mixed solvent, to obtain 164.8 mg of a black crystal. Yield: 75%. 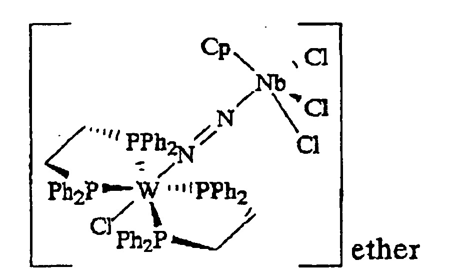 ¹H-NMR(CDCl₃) δ : 1.12 (t, 6H. J = 7.0 Hz, Me of ether), 2.68, 2.90 (br, 4H each, CH₂ of dppe), 3.38 (t, 4H, J = 7.2 Hz, CH₂ of ether), 5.86 (s, 5H, Cp), 6.67-7.66 (m, 40H, Ph);
³¹P{¹H)-NMR(CDCl₃) δ : 34.1 (s with ¹⁸³ W satellites, J_{WP} = 275 Hz);
IR(KBr)1383(m)cm⁻¹.
Anal. Calcd for C₆₁H₆₃Cl₄N₂NbOP₄W: C, 52.99; H, 4.59; N, 2.03. Found:C, 52.88; H, 4.22; N, 2.32

### Example 1(5)

### Synthesis of (chlorobis[1,2-bis(dlethylphosphino) ethane]tungsten)(µ-dinitrogen)[dichloro(cyclopentadienyl) titanium];

326 mg (0.50 mmol) of trans-bis(dinitrogen)bis[1,2-bis (diethylphosphino)ethane]tungsten and 110 mg (0.50 mmol) of trichloro(cyclopentadienyl)titanium were dissolved in 7.5 ml of tetrahydrofuran under room temperature, and the mixture was stirred for 21 hours. The solvent was distilled off from the resulted violet black solution and the resultant solution was subjected to extraction with 8 ml of dichloromethane, then, the resulted extracted solution was concentrated to 1.5 ml. To this was added slowly 8.5 ml of hexane, to obtain 320 mg of a black crystal. Yield: 76%. 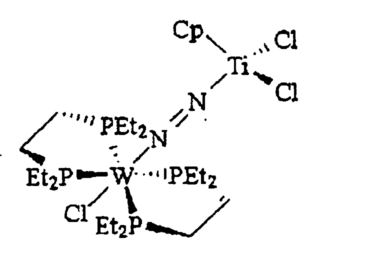 ¹H-NMR(CDCl₃) δ:6.17 (s, 5H, C5H5), 2.18-1.76 (m, 24H,PCH2), 1.29-1.13 (m, 24H, PCH2CH3);
³¹P{¹H}-NMR(CDCl₃) δ : 30. 99 (s with 183W satellites, J(PW) = 270 Hz);
IR(KBr) 1406.3(s)cm⁻¹.
Anal. Calcd. for C25H53Cl3N2P4TiW: C, 35.59; H, 6.33; N, 3.32. Found: C, 35.50; H, 6.44; N, 3.50.

### Example 1(6)

### Synthesis of{chlorobis[1,2-bis(diethylphosphina)ethane] tungsten}(µ-dinitrogen)[dichloro(cyclopentadienyl) titanium];

0.50 mg (0.77 mmol) of trans-bis(dinitrogen)bis[1,2-bis (diethylphosphino)ethane]tungsten and 0.22 g (0.76 mmol) of trichloro(pentamethylcyclopentadienyl)titantum were dissolved in 15 ml of tetrahydrofuran under room temperature, and the mixture was stirred for 15 hours. In this procedure, foaming was caused by gas generation from the red solution, and it changed to dark green suspension. The solvent was distilled off from this suspension and the suspension was subjected to extraction with 10 ml of dichloromethane, then, the resulted extracted solution was concentrated, and to this was added slowly diethyl ether to cause re-crystallization giving 0.48 g of a dark green crystal. Yield; 68%, 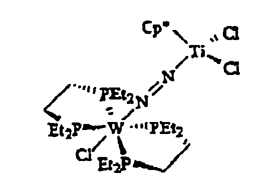 ¹H-NMR(CDCl₃) δ : 2.22-1.70 (m, 24H, PCH2), 1.97 (s, 15H, Cp-CH3), 1.30-1.10 (m, 24H, PCH2CH3);
IR(KBr) 1406.5(s)cm⁻¹.

### Example 1(7)

### Synthesis of {chlorobis[1,2-bis(diethylphosphino)ethane] tungsten}(µ-dinitrogen)[dichloro(indenyl)titanium];

0.252 mg (0.387 mmol) of trans-bis(dinitrogen)bis [1,2-bis(diethylphosphino)ethane]tungsten and 0.105 g (0.390 mmol) of trichloro(indenyl)titanium were dissolved in 10 ml of tetrahydrofuran under room temperature, and the mixture was stirred for 22 hours. In this procedure, foaming was caused by gas generation from the red solution, and it changed to dark green suspension. The solvent was distilled off from this suspension and the resulted solid was subjected to extraction with 9 ml of dichloromethane, then, the resulted extracted solution was concentrated, and to this was added slowly diethyl ether to cause re-crystallization giving 0.25 g of a dark green crystal. Yield: 72%. 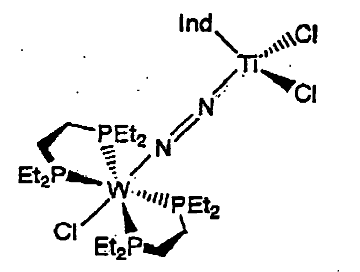 ¹H-NMR(CDCl₃) δ : 7.34(s, 2H, Ind), 6.98(s, 2H, Ind), 6.62(s, 1H, Ind), 6.17(s, 2H, Ind), 2.18-1.60(m, 24H, P-CH₂), 1.26-1.03(m, 24H, CH₃-CH₂).

### Example 1(8)

### Synthesis of {chlorobis[1,2-bis(dipheaylphosphino) ethane]tungsten}(µ-dinitrogen) [dichloro(pentamethyloyclopentadienyl) titanium];

480 mg (0.46 mmol) of trans-bis(dinitrogen)bis [1,2-bis(diphenylphosphino)ethane]tungsten and 140 mg (0.48 mmol) of trichloro (pentamethylcyclopentadienyl) titanium were dissolved in 25 ml of tetrahydrofuran under room temperature, to recognize generation of a gas from the solution, and the color of this solution changed from red to dark green. This solution was stirred for 18 hours, then, the solvent was distilled off to obtain dark green solid. The dark green solid was subjected to extraction with methylene chloride, and the resulted extracted substance was re-crystallized by using a methylene chloride/ether mixed solvent, to obtain 490 mg of a dark green fine crystal. Yield: 82%. 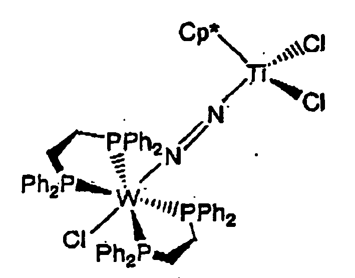 ¹H-NMR(CDCl₃) δ : 1.72 (s, 15H, Cp-CH₃), 2.36, 2.87 (m, 4H, each, CH₂ of dppe), 6.57 (m, 8H, Ph), 6.89 (t, 8H, Ph), 7.09 (t, 4H, Ph). 7.38 (t, 4H, Ph), 7.45 (t, 8H, Ph), 7.76 (m, 8H, Ph); ³¹P{¹H} NMR (CDCl₃) δ: 38.7 (s with ¹⁸³W satellites, J_{WP} = 287 Hz);
IR(KBr) 1409(m)cm⁻¹.
Anal. Calcd for C₆₃H₆₅Cl₅N₂OP₄TiW, C, 57.36; H, 4.89; N, 2.16. Found: C, 57.06; H, 5.16; N,2.17

### Example 1(9)

### Synthesis of {bis[1,2-bis(diphenylphosphino)ethane] (isothiocyanide)tungusten}(µ-dinitrogen)[dichloro (cyolopentadienyl)titanium];

109.7 mg (0.084 mmol) of (tetra-n-butylammonium) [trans-(dinitrogen)bis[1,2-bis(diphenylphosphino)ethane] tungusten and 18,4 mg (0.084 mmol) of trichloro(cyclopentadienyl)titanium were dissolved in 3 ml of benzene under room temperature, and the solution was stirred for 17 hours, then, the solvent was distilled off to obtain a green solid. The green solid was subjected to extraction with methylene chloride, and the resulted extracted substance was re-crystallized by using a methylene chloride/ether mixed solvent, to obtain 68.0 mg of a dark green crystal. Yield 54%. 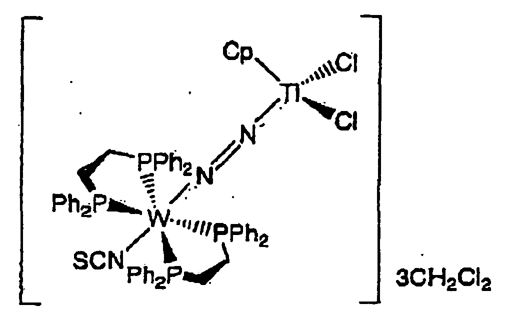 ¹H-NHR (CDCl₃) δ : 1.72 (s, 15H, Cp-CH₃),2.49, 2.81 (m, 4H, each, CH₂ of dppe), 5.80 (s, 5H, Cp), 6.55 - 7.63 (m, 40H, Ph); ³¹P{¹H} NMR (CDCl₃) δ : 38.2 (s with ¹⁸³W satellites , J_{WP} = 284 Hz); IR(KBr) 1441 (m)cm⁻¹.
Anal. Calcd for C₅₃H₆₅Cl₅N₂OP₄TiW: C, 48.67; H, 3.95; N, 2.79. Found: C, 49-02; H, 3,77; N,2.88.

### Example 1(10)

### Synthesis of (chlorobis[1,2-bis(diphenylphosphino) ethane]tungusten}(µ-dinitrogen)[dichloro (methylcyclopentadienyl) titanium];

500 mg (0.48 mmol) of [trans-bis(dinitrogen)bis [1,2-bis (diphenylphosphino)ethane]tungusten and 110 mg (0.48 mmol) of trichloro(methylcyclopentadienyl)titanium were dissolved in 25 ml of tetrahydrofuran under room temperature, to recognize generation of a gas from the solution, and the color of this solution changed from orange to dark brown. The solution was stirred for 24 hours, then, the solvent was distilled off to obtain a black solids The black solid was subjected to extraction with methylene chloride, and the resulted extracted substance was re-crystallized by using a methylene chloride/ether mixed solvent, to obtain 540 mg of a bright black cubic crystal. Yield: 90%. 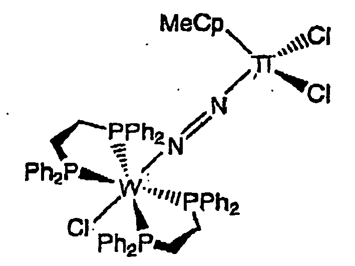 ¹H-NMR (toluene-d₈) δ : 2.00 (s, 3H, Cp-CH₃), 2.39, 2.81 (m, 4H, each, CH₂ of dppe), 5,27, 5,47 (t, 2H, each, Cp-H). 6.59 (s, 8H, Ph), 6.87 (m, 8H, Ph), 7.04 (m, 4H, Ph), 7.30 (m, 12H, Ph), 7.60 (s, 8H, Ph);
³¹P{¹H}-NMR(CD₂Cl₂) δ : 39.9 (s with ¹⁸³W satellites. J_{WP} = 286 Hz); IR(KBr) 1411(m)cm⁻¹.
Anal. Calcd. for C₆₃H₆₅Cl₅N₂OP₄TiW: C, 56.09; H, 4.46; N. 2.26. Found: C, 56.02; H. 4,56; N,2.21.

### Example 1(11)

### Synthesis of {chlorobis[1,2-bis(diethylphosphino) ethane]tungusten}(µ-dinitrogen)[dichloro (methylcyclopentadienyl) titanium];

260 mg (0.40 mmol) of [trans-bis(dinitrogen)bis [1,2-bis (diethylphosphino) ethane]tungusten and 90 mg (0.39 mmol) of trichloro.(methylcyclopentadienyl)titanium were dissolved in 15 ml of tetrahydrofuran under room temperature, to recognize generation of a gas from the solution, and the color of this solution changed from orange to dark brown. The solution was stirred for 14 hours, then, the solvent was distilled off to obtain a black solid. The black solid was subjected to extraction with methylene chloride, and the resulted extracted substance was re-crystallized by using a methylene chloride/ether mixed solvent, to obtain 308 mg of a dark blue needle-like crystal. Yield: 92%. 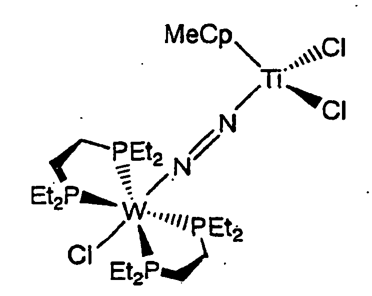 ¹H-NMR (toluene-d₈) δ : 0.93, 1.15 (m, 4H, each, CH₂ of depe), 1.68, 1.85 (m, 4H, each, CH₂ of depe), 1.41, 1.97 (m, 8H, each, CH₂ of depe), 2.27 (s, 3H, Cp-CH₃), 5.82, 6.01 (t, 2H, each, Cp-H)
³¹p{¹H}-NMR(CD₂Cl₂) δ : 36.0 (s with ¹⁸³W satellites, J_{WP} = 269 Hz);
IR(KBr) 1407(m)cm⁻¹.
Anal. Calcd. forC₆₃H₆Cl₅N₂OP₄TiW: C, 36.41; H, 6.46; N, 3 . 27 . Found: C, 36.82; H, 6.69; N,3.21.

### Example 2

An autoclave reactor having an inner volume of 0.4 liter equipped with a stirrer was dried under vacuum and purged with argon, then, 200 ml of toluene as a solvent was charged into this, and the reactor was heated up to 60°C. After heating, ethylene was fed while controlling the ethylene pressure at 0.6 MPa, and after the system was stabilized, 0.50 mmol (mol number in terms of aluminum atom; hereinafter the same) of a solution of methylisobutylaluminoxane in toluene (MMAO3A manufactured by Tosoh Akzo Ltd.; hereinafter, abbreviated simply as MMAO") was charged, and subsequently, 0.1 µmol of [chlorotetrakis(dimethylphenylphosphine)tungsten] (µ-dinitrogen)[dichloro(cyclopentadienyl)titanium] synthesized in the above-mentioned Example 1(1) was charged. Polymerization was conducted for 60 minutes while controlling the temperature at 60°C.

As a result of polymerization, an ethylene polymer having a melting point of 136.7°C was produced at a rate of 2.3×10⁷ g per one hour per 1 mol of a titanium atom.

### Example 3

An autoclave reactor having an inner volume of 0.4 liter equipped with a stirrer was dried under vacuum and purged with argon, then, 200 ml of toluene as a solvent was charged into this, and the reactor was heated up to 60°C. After heating, ethylene was fed while controlling the ethylene pressure at 0.6 MPa, and after the system was stabilized, 0.25 mmol of triisobutylaluminum was charged, subsequently, 0.1 µmol of [chlorotetrakis(dimethylphenylphosphine)tungsten] (µ-dinitrogen) [dichloro(cyclopentadienyl)titanium] was charged, and subsequently, 1.0 µmol of triphenylmethyltetrakis (pentafluorophenyl)borate (called as "[triphenylcarbenium][tetrakis(pentafluorophenyl)borate]) was charged. Polymerization was conducted for 60 minutes while controlling the temperature at 60°C.

As a result of polymerization, an ethylene polymer having a melting point of 136.8°C was produced at a rate of 1.8×10⁷ g per one hour per 1 mol of a titanium atom.

### Example 4

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reaction vessel was heated up to 60°C. After temperature raise, ethylene was fed while controlling the ethylene pressure at 0.6 MPa, and after the system was stabilized, 0.05 mmol of MMAO was charged, and subsequently, 0.5 µmol of [chlorobis(d1phenylphosphinoethane)molybdenum] (µ-dinitrogen)[dichloro(cyclopentadienyl)titanium] synthesized in the above-mentioned Example 1(3) was charged. Polymerization was conducted for 60 minutes while controlling the temperature at 60°C.

As a result of polymerization, a copolymer of ethylene and 1-hexene having a SCB of 18.3, [η] of 4.9 dl/g, a Mw of 3.5 ×10⁵, a Mw/Mn of 2.14 and melting points of 92.0°C and 119.6°C was produced at a rate of 1.7×10⁷ g per one hour per 1 mol of a titanium atom.

### Comparative Example 1

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reaction vessel was heated up to 60°C . After temperature raise, ethylene was fed while controlling the ethylene pressure at 0.6 MPa, and after the system was stabilized, 0.05 mmol of MMAO was charged, and subsequently. 0.5 µmol of (cyclopentadienyl)titanium trichloride was charged. Polymerization was conducted for 60 minutes while controlling the temperature at 60°C.

As a result of polymerization, a copolymer of ethylene and 1-hexene having a SCB of 18.6, a Mw of 2.3×10⁵, a Mw/Mn of 2.43 and melting points of 99-0°C and 115.6°C was produced at a rate of 1.6×10⁷ g per one hour per 1 mol of a titanium atom.

### Example 5

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reaction vessel was heated up to 60°C . After heating, ethylene was fed while controlling the ethylene pressure at 0.6 MPa, and after the system was stabilized, 0.25 mmol of triisobutylaluminum was charged, subsequently, 0.1 µmol of [chlorobis(diphenylphosphlnoethane)molybdenum] (µ-dinitrogen][dichloro(cyclopentadienyl)titanium] was charged, and subsequently, 1.0 µmol of triphenylmethyltetrakis(pentafluorophenyl)borate was charged. Polymerization was conducted for 60 minutes while controlling the temperature at 60°C.

As a result of polymerization, a copolymer of ethylene and 1-hexene having a SCB of 16.4, [η] of 7.5 dl/g, Mw of 4.4 ×10⁵, Mw/Mn of 2.48 and melting point of 121. 0°C, was produced at a rate of 3.8×10⁷ g per one hour per 1 mol of a titanium atom.

### Example 6

An autoclave reactor having an inner volume of 0.4 liter equipped with a stirrer was dried under vacuum and purged with argon, then, 185 ml of toluene as a solvent was charged into this, 15 ml of 1-hexene as an α-olefin was charged, and the reaction vessel was heated up to 180°C. After the heating, ethylene was fed while controlling the ethylene pressure at 2.5 MPa, and after the system was stabilized, 0.90 mmol of MMAO was charged, subsequently, a mixture of 0.5 µmol of [chlorobis(diphenylphosphlnoethane)tungsten](µ -dinitrogen)[dichloro(cyclopentadienyl)titanium] and 0.10 mmol of triisobutylaluminum was charged. Polymerization was conducted for 2 minutes while controlling the temperature at 180°C.

As a result of polymerization, a copolymer of ethylene and 1-hexene having a SCB of 12.6, [η] of 2.7 dl/g, and melting point of 124.6°C was produced at a rate of 1.3×10⁷ g per one hour per 1 mol of a titanium atom.

### Example 7

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C. After the heating, ethylene was fed while controlling the ethylene pressure at 0.6 MPa, and after the system was stabilized, 0.15 mmol of triisobutylaluminum was charged, subsequently, a mixture of 0.05 µmol of [chlorobis(diethylphosphinoethane)tungsten](µ -dinitrogen)[dichloro(cyclopentadienyl)titanium] synthesized in the above-mentioned Example 1(5) and 0.10 mmol of triisobutylaluminum was charged, and subsequently, 1.0 µ mol of triphenylmethyltetrakis(pentafluorophenyl)borate was charged. Polymerization was conducted for 60 minutes while controlling the temperature at 60°C.

As a result of polymerization, a copolymer of ethylene and 1-hexene having a SCB of 19.0 and [η] of 3.7 dl/g was produced at a rate of 2.3×10⁸ g per one hour per 1 mol of a titanium atom.

### Comparative Example 2

An autoclave reactor having an inner volume of 0.4 liter equipped with a stirrer was dried under vacuum and purged with argon, then, 185 ml of toluene as a solvent was charged into this, 15 ml of 1-hexene as an α-olefin was charged, and the reactor was heated up to 180°C. After the heating, ethylene was fed while controlling the ethylene pressure at 2.5 MPa, and after the system was stabilized, 1.0 mmol of MMAO was charged, and subsequently, 2.5 µmol of (cyclopentadienyl)titanium trichloride was charged. Polymerization was conducted for 2 minutes while controlling the temperature at 180°C.

As a result of polymerization, a copolymer of ethylene and 1-hexene having a Mw of 2.3×10⁵, Mw/Mn of 18.8 and a melting point of 124.3°C was produced at a rate of 2.8×10⁴ g per one hour per 1 mol of a titanium atom.

### Example 8

A glass vessel having an inner volume of 0.1 liter was dried under vacuum and purged with argon, then, 13.8 ml of toluene as a solvent was charged into this, 18.3 ml of styrene was charged, and the reaction vessel was heated up to 50°C . After the heating, 1.0 mmol of triisobutylaluminum was charged, subsequently, 10 µmol of [chlorobis(d1phenylphosphinoethane)tungsten](µ -dinitrogen)[dichloro(cyclopentadienyl)niobium] synthesized in the above-mentioned Example 1(4) was charged, and subsequently, 30 µm of N,N-dimethylaniliniumtetrakis(pentafluorophenyl) borate was charged. Polymerization was conducted for 60 minutes while controlling the temperature at 50°C.

As a result of polymerization, a styrene polymer having a Mw of 2.1×10⁴ and Mw/Mn of 2.21 was produced at a rate of 1.1×10⁶ g per one hour per 1 mol of a niobium atom.

### Example 9

An autoclave reactor having an inner volume of 0.4 liter equipped with a stirrer was dried under vacuum and purged with argon, then, 165 ml of toluene as a solvent was charged into this, 35 ml of styrene was charged, and the reaction vessel was heated up to 50°C . After the heating, ethylene was fed while controlling the ethylene pressure at 0.8 MPa, and after the systemwas stabilized, 2.0 mmol of MMAO was charged, subsequently, 10 µmol of [chlorotetrakis(dimethylphenylphosphine) tungsten] ((µ-dinitrogen) [dichloro(cyclopentadienyl) titanium] was charged. Polymerization was conducted for 60 minutes while controlling the temperature at 50°C.

As a result of polymerization, a copolymer of ethylene and styrene having a Mw of 4.3×10⁵, Mw/Mn of 1.96 (converted to polystyrene) and melting point of 108. 8°C was produced at a rate of 4.8×10⁵ g per one hour per 1 mol of a titanium atom.

### Example 10

An autoclave reactor having an inner volume of 0.4 liter equipped with a stirrer was dried under vacuum and purged with argon, then, 40 ml of toluene as a solvent was charged into this, and the reactor was cooled down to -30°C. After the cooling, 1.0 mmol of triisobutylaluminum was charged, subsequently, 1.0 µmol of [chlorotetrak1s(dimethylphenylphosph1ne)molybdenum](µ -dinitrogen)[dichloro(cyclopentadienyl)titanium] was charged, and subsequently, 6.0 µm of triphenylmethyltetrakis(pentafluorophenyl)borate was charged, and lastly, 80 g of propylene was introduced. After introduction of propylene, the autoclave was heated by polymerization heat, to raise the temperature up to 25°C. After introduction of propylene, polymerization was conducted for 8 minutes.

As a result of polymerization, a propylene polymer having a Mw of 7.4×10⁴, Mw/Mn of 1.98 , [mm] of 8.3%, [mr] of 46.3% and [rr] of 45.4% (triad showing stereo regularity) was produced at a rate of 2.0×10⁸ g per one hour per 1 mol of a titanium atom.

### Example 11

An autoclave reactor having an inner volume of 0.4 liter equipped with a stirrer was dried under vacuum and purged with argon, then, 200 ml of n-hexane as a solvent was charged into this, and the reactor was heated up to 60°C . After temperature raise, ethylene was fed while controlling the ethylene pressure at 0.6 MPa, and after the system was stabilized, 0.50 mmol of tributylaluminum was charged, subsequently, a mixture of 0.01 µmol of [chlorobis(diethylphosphinoethane)tungsten] (µ-dinitrogen)[dichloro(pentamethylcyclopentadienyl)titanium] synthesized in the above-mentioned Example 1(6) and 0.01 mmol of triisobutylaluminum was charged, subsequently, 1.0 µmol triphenylmethyltetrakis(pentafluorophenyl)borate was charged. Polymerization was conducted for 60 minutes while controlling the temperature at 60°C.

As a result of polymerization, an ethylene polymer having a Mw of 1.1×10⁶ and Mw/Mn of 2.21 was produced at a rate of 2.3×10⁸ g per one hour per 1 mol of a titanium atom.

### Example 12

An autoclave reactor having a content volume of 0.4 liter equipped with a stirrer was dried under vacuum and purged with argon, then, 190 ml of n-hexane as a solvent was charged into this, 10 ml of 1-hexene as an α-olefin was charged, and the reaction vessel was heated up to 60°C After the heating, ethylene was fed while controlling the ethylene pressure at 0.6 MPa, and after the system was stabilized, 0.50 mmol of tributylaluminum was charged, subsequently, a mixture of 0.01 u mol of [chlorobis(diethylphosphinoethane)tungsten](µ-dinitrogen)[dichloro(pentamethylcyclopentadienyl)titanium] synthesized in the above-mentioned Example 1(6) and 0.01 mmol of triisobutylaluminum was charged, subsequently, 1.0 µmol triphenylmethyltetrakis(pentafluorophenyl)borate was charged. Polymerization was conducted for 60 minutes while controlling the temperature at 60°C.

As a result of polymerization, a copolymer of ethylene and 1-hexene having a SCB of 29.2, Mw of 4.2×10⁵ and Mw/Mn of 2.68 was produced at a rate of 8.0×10⁷ g per one hour per 1 mol of a titanium atom.

### Example 13

An autoclave reactor having a content volume of 0.4 liter equipped with a stirrer was dried under vacuum and purged with argon, then, 190 ml of toluene as a solvent was charged into this, 10 ml of 1-hexene as an α-olefin was charged, and the reaction vessel was heated up to 60°C. After the heating, ethylene was fed while controlling the ethylene pressure at 2.5 MPa, and after the system was stabilized, 0.25 mmol of tributylaluminum was charged, subsequently, 0.025 µmol of [chlorobis(diethylphosphinoethane)tungsten] (µ-dinitrogen)[dichloro(pentamethylcyclopentadienyl)titanium] synthesized in the above-mentioned Example 1(6) was charged, and subsequently, 1.2 µmol triphenylmethyltetrakis (pentafluorophenyl)borate was charged. Polymerization was conducted for 60 minutes while controlling the temperature at 60°C.

As a result of polymerization, a copolymer of ethylene and 1-hexene having a SCB of 16.5, Mw of 1.9×10⁶ and Mw/Mn of 2.85 was produced at a rate of 1.9×10⁹ g per one hour per 1 mol of a titanium atom.

### Example 14

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reaction vessel was heated up to 60°C . After temperature raise, ethylene was fed while controlling the ethylene pressure at 0.6 MPa, and after the system was stabilized, 1.0 mmol of MMAO was charged, and subsequently, 0.02 µmol of [chlorobis(diethylphosphinoethane)tungsten] (µ-dinitrogen)[dichloro(indenyl)titanium] synthesized in the above-mentioned Example 1(7) was charged. Polymerization was conducted for 60 minutes while controlling the temperature at 60°C.

As a result of polymerization, a copolymer of ethylene and 1-hexene having a SCB of 15.6, Mw of 6.4×10⁵, and Mw/Mn of 4.26 was produced at a rate of 8.0×10⁷ g per one hour per 1 mol of a titanium atom.

### Example 15

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reaction vessel was heated up to 60°C. After the heating, ethylene was fed while controlling the ethylene pressure at 0.6 MPa, and after the system was stabilized, 0.25 mmol of tributylaluminum was charged, subsequently, 0.025 mmol of [chlorobis(diphenylphosphinoethane)tungsten] (µ-dinitrogen)[dichloro(pentamethylcyclopentadienyl)titanium] synthesized in the above-mentioned Example 1(8) was charged, and subsequently, 1.0 µmol triphenylmethyltetrakis (pentafluorophenyl)borate was charged. Polymerization was conducted for 60 minutes while controlling the temperature at 60°C.

As a result of polymerization, a copolymer of ethylene and 1-hexene having a SCB of 16.1, Mw of 9.2×10⁵ and Mw/Mn of 5.99 was produced at a rate of 1.4×10⁸ g per one hour per 1 mol of a titanium atom.

### Example 16

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reactor was heatedup to 60°C. After temperature raise, ethylene was fed while controlling the ethylene pressure at 0.6 MPa, and after the systemwas stabilized, 1.0 mmol of MMAOwas charged, and subsequently, 0.025 µmol of [chlorobis(diphenylphosphinoethane)tungsten] (µ-dinitrogen)[dichloro(pentamethylcyclpentadienyl)titanium] synthesized in the above-mentioned Example 1(8) was charged. Polymerization was conducted for 60 minutes while controlling the temperature at 60°C

As a result of polymerization, a copolymer of ethylene and 1-hexene having a SCB of 16.1, Mw of 8.0×10⁵, and Mw/Mn of 3.86 was produced at a rate of 1.1×10⁸ g per one hour per 1 mol of a titanium atom.

### Example 17

An autoclave reactor having an inner volume of 0.4 liter equipped with a stirrer was dried under vacuum and purged with argon, then, 40 ml of toluene as a solvent was charged into this, 80g of propylene was charged, and the reactor was heated up to 60°C . After the heating and after the system was stabilized, 1.0 mmol of MMAO was charged, and subsequently, 0.10 µmol of [chlorobis(diphenylphosphinoethane)tungsten] (µ-dinitrogen)[dichloro(pentamethylcyclpentadienyl)titanium] synthesized in the above-mentioned Example 1(8) was charged. Polymerization was conducted for 60 minutes while controlling the temperature at 60°C.

As a result of polymerization, a propylene polymer having a Mw of 5.6×10⁵, Mw/Mn of 4.00 , and [mm] of 13.2%, [mr] of 46.4% and [rr] of 40.4% as triad showing stereo regularity was produced at a rate of 1.6×10⁷ g per one hour per 1 mol of a titanium atom.

### Example 18

An autoclave reactor having a content volume of 0.4 liter equipped with a stirrer was dried under vacuum and purged with argon, then, 190 ml of toluene as a solvent was charged into this, 10 ml of 1-hexene as an α-olefin was charged, and the reactor was heated up to 60°C. After the heating, ethylene was fed while controlling the ethylene pressure at 0.6 MPa, and after the system was stabilized, 0.25 mmol of trimethylaluminum was charged, subsequently, 0.025 µmol of [bis(diphenylphosphinoethane)(isothiocyanide)tungsten] (µ-dinitrogen)[dichloro(cyclopentadienyl)titanium](3 · dichloromethane) synthesized in the above-mentioned Example 1(9) was charged, and subsequently, 1.0 µmol triphenylmethyltetrakis (pentafluorophenyl)borate was charged. Polymerization was conducted for 60 minutes while controlling the temperature at 60°C.

As a result of polymerization, a copolymer of ethylene and 1-hexene having a SCB of 26.4, Mw of 3.4×10⁵ and Mw/Mn of 2.23 was produced at a rate of 2.9×10⁸ g per one hour per 1 mol of a titanium atom.

### Example 19

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C . After temperature raise, ethylene was fed while controlling the ethylene pressure at 0.6 MPa, and after the system was stabilized, 1.0 mmol of MMAO was charged, and subsequently, 0.0125 µmol of [bis(diphenylphosphinoethane)(isothiocyanide)tungsten] (µ-dinitrogen)[dichloro(cyclopentadienyl)titanium](3' dichloromethane) synthesized in the above-mentioned Example 1(9) was charged. Polymerization was conducted for 60 minutes while controlling the temperature at 60°C.

As a result of polymerization, a copolymer of ethylene and 1-hexene having a SCB of 16. 5, Mw of 7.9×10⁵, and Mw/Mn of 2. 32 was produced at a rate of 3.6×10⁸ g per one hour per 1 mol of a titanium atom.

### Example 20

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C. After the heating, ethylene was fed while controlling the ethylene pressure at 0.6 MPa, and after the system was stabilized, 0.25 mmol of tri-n-octylaluminum was charged, subsequently, 0.025 µmol of [chlorobis(diphenylphosphinoethane)tungsten](µ -dinitrogen)[dichloro(methylcyclopentadienyl)titanium] synthesized in the above-mentioned Example 1(10) was charged, and subsequently, 1.0 µmol triphenylmethyltetrakis (pentafluorophenyl)borate was charged. Polymerization was conducted for 60 minutes while controlling the temperature at 60°C.

As a result of polymerization, a copolymer of ethylene and 1-hexene having a SCB of 18.1, Mw of 1.3×10⁶ and Mw/Mn of 3.11 was produced at a rate of 4.3×10⁸ g per one hour per 1 mol of a titanium atom.

### Example 21

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C. After temperature raise, ethylene was fed while controlling the ethylene pressure at 0.6 MPa, and after the system was stabilized, 1.0 mmol of MMAO was charged, and subsequently, 0.025 µmol of [chlorobis(diphenylphosphinoethane)tungsten](µ -dinitrogen)[dichloro(methylcyclopentadienyl)titanium] synthesized in the above-mentioned Example 1(10) was charged. Polymerization was conducted for 60 minutes while controlling the temperature at 60°C.

As a result of polymerization, a copolymer of ethylene and 1-hexene having a SCB of 16.9, Mw of 9.0×10⁵, and Mw/Mn of 3.40 was produced at a rate of 2.2×10⁸ g per one hour per 1 mol of a titanium atom.

### Example 22

An autoclave reactor having an inner volume of 0.4 liter equipped with a stirrer was dried under vacuum and purged with argon, then, 40 ml of toluene as a solvent was charged into this, 80g of propylene was charged, and the reactor was heated up to 60°C. After the heating and after the systemwas stabilized, 1.0 mmol of MMAO was charged, and subsequently, 0.10 µmol of [chlorobis(diphenylphosphinoethane)tungsten](µ -dinitrogen)[dichloro(methylcyclopentadienyl)titanium] synthesized in the above-mentioned Example 1(10) was charged. Polymerization was conducted for 60 minutes while controlling the temperature at 60°C .

As a result of polymerization, a propylene polymer having a Mw of 1.3×10⁵, Mw/Mn of 1.80 , and [mm] of 10.4%, [mr] of 44.2% and [rr] of 45.4% as triad showing stereo regularity was produced at a rate of 4.4×10⁷ g per one hour per 1 mol of a titanium atom.

### Example 23

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C . After the heating, ethylene was fed while controlling the ethylene pressure at 0.6 MPa, and after the system was stabilized, 0.25 mmol of triisobutylaluminum was charged, subsequently, 0.025 µmol of [chlorobis(diethylphosphinoethane)tungsten](µ -dinitrogen)[dichloro(methylcyclopentadienyl)titanium] synthesized in the above-mentioned Example 1(11) was charged, and subsequently, 1.0 µmol triphenylmethyltetrakis (pentafluorophenyl)borate was charged. Polymerization was conducted for 60 minutes while controlling the temperature at 60°C

As a result of polymerization, a copolymer of ethylene and 1-hexene having a SCB of 16.3, Mw of 2.8×10⁵ and Mw/Mn of 1.95 was produced at a rate of 2.5×10⁸ g per one hour per 1 mol of a titanium atom.

### Example 24

An autoclave reactor having an inner volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C . After temperature raise, ethylene was fed while controlling the ethylene pressure at 0.6 MPa, and after the system was stabilized, 1.0 mmol of MMAO was charged, and subsequently, 0.025 µmol of [chlorobis(diethylphosphinoethane)tungsten] (µ-dinitrogen)[dichloro(methylcyclopentadienyl)titanium] synthesized in the above-mentioned Example 1(11) was charged. Polymerization was conducted for 60 minutes while controlling the temperature at 60°C.

As a result of polymerization, a copolymer of ethylene and 1-hexene having a SCB of 16.7, Mw of 4.8×10⁵, and Mw/Mn of 2.94 was produced at a rate of 1.5×10⁸ g per one hour per 1 mol of a titanium atom.

### Example 25

An autoclave reactor having an inner volume of 0.4 liter equipped with a stirrer was dried under vacuum and purged with argon, then, 170 ml of toluene as a solvent was charged into this, 30 ml of 1-hexene as an α-olefin was charged, and the reactor was heated up to 180°C. After temperature raise, ethylene was fed while controlling the ethylene pressure at 2.5 MPa, and after the system was stabilized, 1.0 mmol of MMAO was charged, and subsequently, 0.25 µmol of [chlorobis(diethylphosphinoethane)tungsten](µ -dinitrogen)[dichloro(methylcyclopentadienyl)titanium] synthesized in the above-mentioned Example 1(11) was charged. Polymerization was conducted for 2 minutes while controlling the temperature at 180°C.

As a result of polymerization, a copolymer of ethylene and 1-hexene having a SCB of 13.1, Mw of 6.8×10⁴, and Mw/Mn of 2.07 was produced at a rate of 6.4×10⁸ g per one hour per 1 mol of a titanium atom.

### Example 26

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C. After the heating, ethylene was fed while controlling the ethylene pressure at 0.6 MPa, and after the system was stabilized, 0.35 mmol of triisobutylaluminum was charged, subsequently, 1.0 µmol of [chlorobis(diphenylphosphinoethane)tungsten](µ -dinitrogen)[trichloro(cyclopentadienyl)niobium](diethylet her) synthesized in the above-mentioned Example 1(4) was charged, and subsequently, 6.0 µmol triphenylmethyltetrakis (pentafluorophenyl)borate was charged. Polymerization was conducted for 60 minutes while controlling the temperature at 60°C.

As a result of polymerization, a copolymer of ethylene and 1-hexene having a SCB of 10.1, Mw of 6.3×10⁴ and Mw/Mn of 1.78 was produced at a rate of 4.9×10⁶ g per one hour per 1 mol of a niobium atom.

### Example 27

[chlorotetrakis(dimethylphenylphosphine)tungusten] (µ-dinitrogen)[trichloro(pentamethylcyclopentadienyl) niobium](toluene) shown below as a transition metal compound was used.

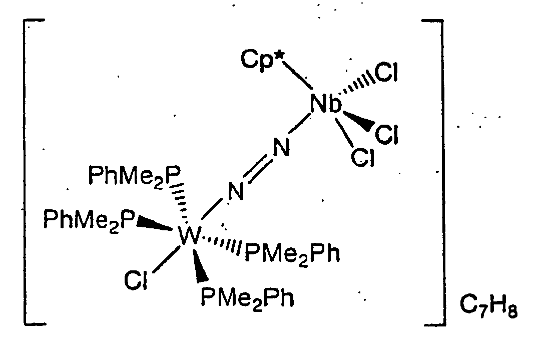

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C. After the heating, ethylene was fed while controlling the ethylene pressure at 0.6 MPa, and after the system was stabilized, 0.45 mmol of triisobutylaluminum was charged, subsequently, 2.0 µmol of [chlorotetrakis(dimethylphenylphosphine)tungsten] (µ-dinitrogen)[trichloro(pentamethylcyclopentadienyl)niobium] (toluene) synthesized in the above-mentioned Example 1(12) was charged, and subsequently, 3.0 µmol triphenylmethyltetrakis (pentafluorophenyl)borate was charged. Polymerization was conducted for 60 minutes while controlling the temperature at 60°C. As a result of polymerization, a copolymer of ethylene and 1-hexene having a SCB of 8.3, Mw of 8.9×10⁴ and Mw/Mn of 2.21 was produced at a rate of 1.0×10⁶ g per one hour per 1 mol of a niobium atom.

### Example 28

[chlorotetrakis(dimethylphenylphosphine) tungusten](µ -dinitrogen)[trichloro(cyclopentadienyl) tantalum](dichloromethane) shown below as a transition metal compound was used.

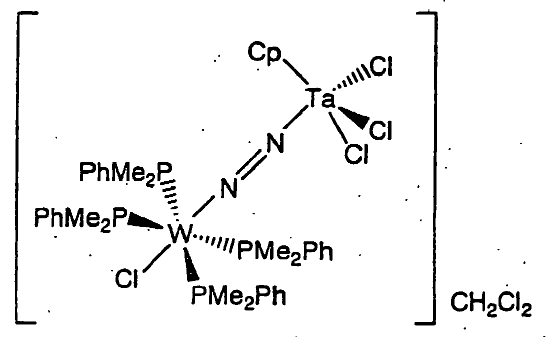

An autoclave reactor having a content volume of 0.4 liter equipped with a stirrer was dried under vacuum and purged with argon, then, 198 ml of toluene as a solvent was charged into this, 2 ml of 1-hexene as an α-olefin was charged, and the reactor was heated up to 60°C . After the heating, ethylene was fed while controlling the ethylene pressure at 0.6 MPa, and after the system was stabilized, 0.45 mmol of triisobutylaluminum was charged, subsequently, 2.0 µmol of [chlorotetrakis(dimethylphenylphosphine)tungsten] (µ-dinitrogen)[trichloro(cyclopentadienyl)tantalum](dichloro methane) synthesized in the above-mentioned Example 1(13) was charged, and subsequently, 3.0 µmol triphenylmethyltetrakis (pentafluorophenyl)borate was charged. Polymerization was conducted for 60 minutes while controlling the temperature at 60°C. As a result of polymerization, a copolymer of ethylene and 1-hexene having a SCB of 7.5, Mw of 6.4×10⁴ and Mw/Mn of 1.74 was produced at a rate of 6.0×10⁵ g per one hour per 1 mol of a tantalum atom.

As described in detail above, the present invention provides a catalyst component for addition polymerization composed of a transition metal compound which can manifest high activity, a catalyst for addition polymerization prepared by using this catalyst component for addition polymerization, and an efficient process for producing an addition polymer, using this catalyst for addition polymerization.

## Claims

1. A catalyst component for addition polymerization composed of a transition metal compound (A) of the following general formula [1]:
[LₚXₒ(N₂)ₙM'XₘLₗ]X'ₖ [1]
wherein M represents a transition metal atom of group III to V in the Periodic Table of the Elements; M' represents a transition metal atom of group III to X in the Periodic Table of Elements; X each independently represents a hydrogen atom, halogen atom, alkyl group, aralkyl group, aryl group, substituted silyl group, alkoxy group, aralkyloxy group, aryloxy group, di-substituted amino group, azido group, cyano group, isothiocyanate group or group having a cyclopentadiene type anion skeleton; L represents a group which bonds to M or M' by a lone-paired electron or a π electron; X' represents a counter anion; o represents an integer of 1 to 5 and at least one X represents a group having a cyclopentadiene type anion skeleton; k, 1, m and p each independently represent an integer of 0 to 5; and n represents an integer of 1 to 3.

2. The catalyst component according to Claim 1, wherein M' represents a transition metal atom of group VI to X.

3. The catalyst component according to Claim 1 or 2, wherein X is a hydrogen atom, halogen atom, alkyl group, aralkyl group, aryl group, substituted silyl group, alkoxy group, aralkyloxy group, aryloxy group, di-substituted amino group or group having a cyclopentadiene type anion skeleton.

4. A catalyst for addition polymerization obtained by a process comprising bringing the transition metal compound (A) according to any one of Claims 1 to 3 into contact with an organoaluminum compound selected from
the following (B1), and/or an aluminoxane selected from the following (B2) and (B3) and/or a boron compound selected from the following (C):
(B1) organoaluminum compounds of the general formula E¹ₐAlZ₃₋ₐ,
(B2) cyclic aluminoxanes having a structure of the general formula {-Al(E²)-O-}_{b},
(B3) linear aluminoxanes having a structure of the general formula E³{-Al(E³)-O-}_{c}AlE³₂,
(wherein each of E¹, E² and E³ represents a hydrocarbon group; all E¹s, all E²s or all E³s may be the same or different; Z represents a hydrogen atom or halogen atom; all Zs may be the same or different; a represents a number satisfying O<a≤3; b represents an integer of 2 or more; and c represents an integer of 1 or more), and
(C) one or more boron compounds selected from the following (C1) to (C3):
(C1) boron compounds represented by the general formula BQ¹Q²Q³,
(C2) boron compounds represented by the general formula G⁺(BQ¹Q²Q³Q⁴)⁻, and
(C3) boron compounds represented by the general formula (L-H)⁺(BQ¹Q²Q³Q⁴)⁻
(wherein B represents boron in trivalent state; Q¹ to Q⁴ represent a halogen atom, hydrocarbon group, halogenated hydrocarbon group, substituted silyl group, alkoxy group or di-substituted amino group; they may be the same ore different; G⁺ represents an inorganic or organic cation; L represents a neutral Lewis base; and (L-H) represents a Brønsted acid), wherein the combinations of the compound (A) with the compounds (B1) to (B3) and/or the compounds (C1) to (C3) are defined as follows:
(1) (A), (B1), and (B2) and (B3);
(2) (A), (B1), and one or more compounds selected from (C1), (C2) and (C3);
(3) (A), (B1), (B2) and (B3), and one or more compounds selected from (C1), (C2) and (C3);
(4)(A) and (B2), and (B3);
(5) (A), and one or more compounds selected from (C1), (C2) and (C3): and
(6) (A), (B2) and (B3), and one or more compounds selected from (C1), (C2) and (C3).

5. A process for producing an addition polymer which comprises polymerizing an addition polymerizable monomer with the catalyst of claim 4.

## Patentansprüche

1. Katalysatorbestandteil für Additionspolymerisation, zusammengesetzt aus einer Übergangsmetallverbindung (A) der folgenden allgemeinen Formel [1]:
[LₚXₒM(N₂)ₙM'XₘLₗ]X'ₖ [1]
wobei M ein Übergangsmetallatom der Gruppen III bis V im Periodensystem der Elemente darstellt; M' ein Übergangsmetallatom der Gruppen III bis X im Periodensystem der Elemente darstellt; X jeweils unabhängig ein Wasserstoffatom, ein Halogenatom, einen Alkylrest, einen Aralkylrest, einen Arylrest, einen substituierten Silylrest, einen Alkoxyrest, einen Aralkyloxyrest, einen Aryloxyrest, einen disubstituierten Aminorest, eine Azidogruppe, eine Cyanogruppe, eine Isothiocyanatgruppe oder einen Rest mit einem Anionengerüst vom Cyclopentadientyp darstellt; L einen Rest, der M oder M' über ein Elektron eines freien Elektronenpaars oder ein π-Elektron bindet, darstellt; X' ein Gegenanion darstellt; o eine ganze Zahl von 1 bis 5 darstellt und mindestens ein X einen Rest mit einem Anionengerüst vom Cyclopentadientyp darstellt; k, l, m und p jeweils unabhängig eine ganze Zahl von 0 bis 5 darstellen und n eine ganze Zahl von 1 bis 3 darstellt.

2. Katalysatorbestandteil gemäß Anspruch 1, wobei M' ein Übergangsmetallatom der Gruppen VI bis X darstellt.

3. Katalysatorbestandteil gemäß Anspruch 1 oder 2, wobei X ein Wasserstoffatom, ein Halogenatom, einen Alkylrest, einen Aralkylrest, einen Arylrest, einen substituierten Silylrest, einen Alkoxyrest, einen Aralkyloxyrest, einen Aryloxyrest, einen disubstituierten Aminorest oder einen Rest mit einem Anionengerüst vom Cyclopentadientyp darstellt.

4. Katalysator für Additionspolymerisation erhalten durch ein Verfahren umfassend In-Kontakt-Bringen der Übergangsmetallverbindung (A) gemäß einem der Ansprüche 1 bis 3 mit einer Organoaluminiumverbindung, ausgewählt aus den folgenden (B1) und/oder einem Aluminoxan, ausgewählt aus den folgenden (B2) und (B3) und/oder einer Borverbindung, ausgewählt aus den folgenden (C):
(B1) Organoaluminiumverbindungen der allgemeinen Formel E¹ₐAlZ₃₋ₐ,
(B2) cyclische Aluminoxane mit einer Struktur der allgemeinen Formel {-Al(E²)-O-}_{b},
(B3) lineare Aluminoxane mit einer Struktur der allgemeinen Formel E3{-Al(E³)-O-}_{c}AlE³₂,
(wobei jeder der Reste E¹, E² und E³ einen Kohlenwasserstoffrest darstellt; alle Reste E¹, alle Reste E² oder alle E³ gleich oder verschieden sein können; Z ein Wasserstoffatom oder ein Halogenatom darstellt; alle Reste Z gleich oder verschieden sein können; a eine Zahl darstellt, die 0<a≤3 genügt; b eine ganze Zahl von 2 oder mehr darstellt; und c eine ganze Zahl von 1 oder mehr darstellt), und
(C) eine oder mehr Borverbindungen, ausgewählt aus den folgenden (C1) bis (C3):
(C1) Borverbindungen, dargestellt durch die allgemeine Formel BQ¹Q²Q³,
(C2) Borverbindungen, dargestellt durch die allgemeine Formel G⁺(BQ¹Q²Q³Q⁴)⁻, und
(C3) Borverbindungen, dargestellt durch die allgemeine Formel (L-H)⁺(BQ¹Q²Q³Q⁴)⁻
(wobei B Bor im trivalenten Zustand darstellt; Q¹ bis Q⁴ ein Halogenatom, einen Kohlenwasserstoffrest, einen halogenierten Kohlenwasserstoffrest, einen substituierten Silylrest, einen Alkoxyrest oder einen disubstituierten Aminorest darstellen; wobei diese gleich oder verschieden sein können; G⁺ ein anorganisches oder organisches Kation darstellt; L eine neutrale Lewis-Base darstellt; und (L-H)⁺ eine Brønstedsäure darstellt), wobei die Kombinationen der Verbindung (A) mit den Verbindungen (B1) bis (B3) und/oder den Verbindungen (C1) bis (C3) wie folgt definiert sind:
(1) (A), (B1) und (B2) und (B3);
(2) (A), (B1) und eine oder mehrere Verbindungen, ausgewählt aus (C1), (C2) und (C3);
(3) (A), (B1), (B2) und (B3) und eine oder mehrere Verbindungen, ausgewählt aus (C1), (C2) und (C3);
(4) (A) und (B2) und (B3);
(5) (A) und eine oder mehr Verbindungen, ausgewählt aus (C1), (C2) und (C3); und
(6) (A), (B2) und (B3) und eine oder mehr Verbindungen, ausgewählt aus (C1), (C2) und (C3).

5. Verfahren zur Herstellung eines Additionspolymers, umfassend Polymerisieren eines additionspolymerisierbaren Monomers mit dem Katalysator gemäß Anspruch 4.

## Revendications

1. Constituant de catalyseur pour une polymérisation par addition constitué d'un composé de métal de transition (A) de la formule générale [1] suivante :
[LₚXₒM (N₂)ₙM'XₘLₗ)X'ₖ [1]
dans laquelle M représente un atome de métal de transition du groupe III à V dans la classification périodique des éléments ; M' représente un atome de métal de transition du groupe III à X dans la classification périodique des éléments ; X représente à chaque fois indépendamment un atome d'hydrogène, un atome d'halogène, un groupe alkyle, un groupe aralkyle, un groupe aryle, un groupe silyle substitué, un groupe alcoxy, un groupe aralkyloxy, un groupe aryloxy, un groupe amino di-substitué, un groupe azido, un groupe cyano, un groupe isothiocyanate ou un groupe présentant un squelette d'anion de type cyclopentadiène ; L représente un groupe qui se lie à M ou M' par un électron d'un doublet isolé ou par un électron π ; X' représente un contre-anion ; o représente un nombre entier de 1 à 5 et au moins un X représente un groupe présentant un squelette d'anion de type cyclopentadiène ; k, l, m et p représentent chacun indépendamment un nombre entier de 0 à 5 ; et n représente un nombre entier de 1 à 3.

2. Constituant de catalyseur selon la revendication 1, dans lequel M' représente un atome de métal de transition du groupe VI à X.

3. Constituant de catalyseur selon la revendication 1 ou 2, dans lequel X est un atome d'hydrogène, un atome d'halogène, un groupe alkyle, un groupe aralkyle, un groupe aryle, un groupe silyle substitué, un groupe alcoxy, un groupe aralkyloxy, un groupe aryloxy, un groupe amino di-substitué ou un groupe présentant un squelette d'anion de type cyclopentadiène.

4. Catalyseur pour une polymérisation par addition obtenu par un procédé comprenant la mise en contact du composé de métal de transition (A) selon l'une quelconque des revendications 1 à 3 avec un composé d'organoaluminium choisi parmi le (B1) suivant, et/ou un aluminoxane choisi parmi les (B2) et (B3) suivants et/ou un composé du bore choisi parmi le (C) suivant:
(B1) des composés d'organoaluminium de la formule générale E¹ₐAlZ₃₋ₐ,
(B2) des aluminoxanes cycliques présentant une structure de la formule générale {-Al(E²)-O-}_{b,}
(B3) des aluminoxanes linéaires présentant une structure de la formule générale E³{-Al(E³)-O-}_{c}AlE³₂,
(dans lesquelles chacun des E¹, E² et E³ représente un groupe hydrocarboné ; tous les E¹, tous les E² ou tous les E³ peuvent être identiques ou différents ; Z représente un atome d'hydrogène ou un atome d'halogène ; tous les Z peuvent être identiques ou différents ; a représente un nombre satisfaisant 0 < a ≤ 3 ; b représente un nombre entier de 2 ou supérieur ; et c représente un nombre entier de 1 ou supérieur), et
(C) un ou plusieurs composés du bore choisis parmi les (C1) à (C3) suivants:
(C1) des composés du bore représentés par la formule générale BQ¹Q²Q³,
(C2) des composés du bore représentés par la formule générale G+(BQ¹Q²Q³Q⁴)⁻, et
(C3) des composés du bore représentés par la formule générale (L-H)⁺(BQ¹Q²Q³Q⁴)⁻
(dans lesquelles B représente le bore dans un état trivalent ; Q¹ à Q⁴ représentent un atome d'halogène, un groupe hydrocarboné, un groupe hydrocarboné halogéné, un groupe silyle substitué, un groupe alcoxy ou un groupe amino di-substitué ; ils peuvent être identiques ou différents ; G⁺ représente un cation inorganique ou organique ; L représente une base de Lewis neutre ; et (L-H)⁺ représente un acide de Brönsted), dans lequel les combinaisons du composé (A) avec les composés (B1) à (B3) et/ou les composés (C1) à (C3) sont définis comme suit :
(1) (A), (B1), et (B2) et (B3);
(2) (A), (B1), et un ou plusieurs composés choisis parmi (C1), (C2) et (C3) ;
(3) (A), (B1), (B2) et (B3), et un ou plusieurs composés choisis parmi (C1), (C2) et (C3);
(4) (A), et (B2) et (B3);
(5) (A) et un ou plusieurs composés choisis parmi (C1), (C2) et (C3) ; et
(6) (A), (B2) et (B3), et un ou plusieurs composés choisis parmi (C1), (C2) et (C3).

5. Procédé pour la production d'un polymère d'addition qui comprend la polymérisation d'un monomère polymérisable par addition avec le catalyseur selon la revendication 4.
